# EUROPÄISCHE PATENTSCHRIFT

(11) **EP 0 527 137 B1**
(45) Veröffentlichungstag und Bekanntmachung des Hinweises auf die Patenterteilung: **22.06.1994**
(21) Anmeldenummer: 91905149.0
(22) Anmeldetag: 13.03.1991
(51) Int. Cl.: H02H 9/00

(54) **VERFAHREN UND VORRICHTUNG ZUR REDUZIERUNG DES EINSCHALTSTROMSTOSSES BEIM BETREIBEN EINER INDUKTIVITÄTSBEHAFTETEN LAST**
PROCESS AND DEVICE FOR REDUCING THE INRUSH CURRENT WHEN POWERING AN INDUCTIVE LOAD
PROCEDE ET DISPOSITF DESTINES A REDUIRE LE COURANT D'ENTREE LORS DE LA MISE EN SERVICE D'UNE CHARGE SOUMISE A UNE INDUCTANCE

(30) Priorität: 30.04.1990 DE 4013888; 20.06.1990 DE 4019592
(43) Veröffentlichungstag der Anmeldung: 17.02.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: KONSTANZER, Michael, D-7800 Freiburg (DE)
(74) Vertreter: Schmitt, Hans, Dipl.-Ing.
(86) Internationale Anmeldenummer: DE9100216
(87) Internationale Veröffentlichungsnummer: WO9117597

(56) Entgegenhaltungen:
- BE-A- 549 364
- DE-A- 1 488 388
- DE-A- 2 812 166
- DE-A- 3 513 365
- US-A- 4 131 927

## Beschreibung

Die Erfindung bezieht sich auf ein Verfahren und eine Vorrichtung zur Reduzierung des Einschaltstromstoßes beim Betreiben einer induktivitätsbehafteten und mit einem magnetisierbaren Kern versehenen Last an einem Wechselstromnetz, wobei zumindest zeitweise ein Phasenanschnitt vorgesehen ist.

Beim Betreiben induktivitätsbehafteter Lasten verbleibt nach dem Ausschalten im magnetisierbaren Kern solcher Lasten eine magnetische Remanenz oder remanente Induktion, die je nach Polarität der Wechselspannung zum Ausschaltzeitpunkt unterschiedlich gepolt sein kann und auch eine unterschiedliche Größe haben kann.
Beim Einschalten induktivitätsbehafteter Lasten ist deren Remanenzlage in der Regel unbekannt und es tritt speziell zum Beispiel bei Transformatoren mit hoher Induktion und geringen Luftspalten, insbesondere auch bei Ringkerntransformatoren, beim Zusammentreffen eines zur Remanenzlage "unpassenden" Einschaltzeitpunktes, bezogen auf den Verlauf der Wechselspannung, ein hoher Einschaltstromstoß auf, der unter Umständen bis zum fünfzigfachen des Nennstromes betragen kann und zum Auslösen von Sicherungselementen führt. Diese hohen Ströme ergeben sich, weil die Magnetisierung hierbei weit in die Sättigung getrieben wird.
Man ist aus diesem Grunde gezwungen, die Induktion soweit zu reduzieren, bis der Einschaltstrom auch im ungünstigsten Fall einen vorgegebenen Grenzwert nicht überschreitet. Dies erfordert jedoch bei gleicher Nennleistung erheblich mehr Eisen für den Kern, zum Beispiel eines Transformators und macht diesen entsprechend groß und schwer, was sich insbesondere bei Transformatoren hoher Leistung sehr nachteilig auswirkt.

Zum Stand der Technik ist die DE-PS 27 46 845 bekannt, bei der während einer Einschaltphase der Stromflußwinkel allmählich vergrößert wird, um einen Sanftanlauf zu bewirken. Eine weitere Aufgabenlösung besteht auch darin, nach dem Hochdimmen eine volle Durchschaltung des Wechselstromschalters zu erreichen.

Nachteilig ist dabei, daß sich hier trotzdem die Induktion des Transformators während des Andimmens bei gleicher Polarität der Remanenz im Ruhezustand und des ersten eingeschalteten Spannungssignals immer mehr in die Sättigung verschiebt, so daß sich über aufeinanderfolgende angeschnittene Halbwellen insbesondere durch Unsymetrien der Anschnitte der positiven und der negativen Netzhalbwelle ein Einschaltspitzenstrom aufsummiert. Mit dieser Vorrichtung kann die vorhandene Remanenzpolarität zum Beispiel eines Transformators nicht berücksichtigt werden, so daß hier Einschaltspitzenströme auftreten können.

Auch mit den Maßnahmen der DE-PS 35 13 365, wobei es um die Strombegrenzung beim Einschalten von Lampen geht, lassen sich Einschaltstromspitzen bei induktiver Last nicht verhindern. Eine ähnliche Beschaltungsanordnung ist aus dem ELV-Journal 45, Seite 1 bis 4, bekannt. Hier wird im Einschaltmoment von einem verhältnismäßig kleinen Anschnittwinkel, d. h. einem Phasenanschnittwinkel von 180 ° und dementsprechend geringer Anlaufleistung ausgegangen und dieser Phasenanschnittwinkel verschiebt sich dann in einer typischen Zeit von 0,5 bis 2 Sekunden auf 0 ° nach den Nulldurchgang jeder Netzhalbwelle, was der vollen Leistung entspricht.

Weiterhin ist es aus der DE-AS 27 433 65 bekannt, einen Transformator bei einem Phasenwinkel von 90 ° oder 270 ° einzuschalten. Dabei wird aber nicht berücksichtigt, bei welchem Phasenwinkel ausgeschaltet wurde und welche Polarität und Größe die Remanenz jeweils hatte.

Die DE-OS 24 24 716 zeigt bereits eine Möglichkeit, den Einschaltstromstoß bei Transformatoren zu verhindern bzw. zu reduzieren. Dazu wird die Ist-Remanenz nach Betrag und Phase gemessen und in der Phasenlage eingeschaltet, bei welcher der kleinste Stromstoß erzeugt wird. Um dies zu realisieren müssen an einer oder mehreren Schachtelstellen des Transformatorkernes Meßsonden eingebaut werden. Dies muß aber bereits beim Bau der Transformatoren berücksichtigt werden, so daß dieses Verfahren für vorhandene, beliebige Transformatoren oder dergleichen praktisch nicht einsetzbar ist.

Die US-A- 39 25 688 und die DE-A- 27 35 736 zeigen Wechselstromschalteinrichtungen, die ein Einschalten beim Nulldurchgang zu Beginn einer Wechselspannungsperiode und ein Ausschalten beim Nulldurchgang am Ende einer Wechselspannungsperiode bewirken. Insbesondere beim Schalten von schnell aufeinanderfolgenden Pulsgruppen kann dies jedoch zu einem Aufschaukeln des Blindstromes und damit schließlich zu einer Überlastung führen, so daß diese Schaltungen insbesondere für diesen Anwendungsfall ungünstig sind, aber auch beim einmaligen Einschalten noch hohe Blindströme verursachen können.

Die EP-A- 0 222 727 zeigt eine Einrichtung mit der in Abhängigkeit vom Ausschaltzeitpunkt über eine einstellbare Verzögerung ab dem Nulldurchgang der Wechselspannung eingeschaltet werden kann. Man ist dadurch zwar nicht an einen festen Ausschaltzeitpunkt gebunden, jedoch ergeben sich auch hier beim Einschalten noch vergleichsweise hohe Blindströme und ein Betrieb mit schnell aufeinanderfolgenden Pulsgruppen würde zu einem Aufsummieren der Blindströme und schließlich zu einem "Inrush" führen. Außerdem kann auch hier die Remanenzlage bei einem ersten Einschalten nicht erkannt und berücksichtigt werden, so daß ein hoher Einschaltstromstoß auftreten kann.

Aus der DE-A- 25 30 047 und der PCT/DE 90/00272 kennt man bereits Vorrichtungen, mit denen durch eine Kondensatorentladung vor oder beim Einschalten der induktivitätsbehafteten Last ein definiertes Setzen der Remanenz möglich ist. Dies erfordert jedoch einen vergleichsweise hohen Aufwand unter anderem durch den oder die Kondensatoren selbst, eine Ladeeinrichtung, einen separaten Entladeschalter und dergleichen. Außerdem sind bei größeren Transformatoren auch entsprechend große Kondensatoren einschließlich der vorgenannten Zusatzeinrichtungen erforderlich.

Schließlich kennt man aus der US-A 4 131 927 bereits eine Vorrichtung, bei der die Spannung an der Last gemessen und ein vorgebbarer Remanenzwert dann als erreicht angesehen wird, wenn die in Lücken zwischen zwei Spannungspulsen gemessene Gegen-EMK der Induktivität einen bestimmten Wert aufweist. Zum Strombeaufschlagen der Last ist zusätzlich zum Wechselstromschalter ein parallel geschalteter Thyristor mit Vorwiderstand zur Strombegrenzung vorgesehen.

Aufgabe der vorliegenden Erfindung ist es, ein Verfahren und eine Vorrichtung zu schaffen, mit der die eingangs erwähnten Nachteile zumindest weitestgehend vermieden werden, wobei insbesondere unabhängig vom Remanenz-Ausgangszustand der induktivitätsbehafteten Last diese an ein Wechselstromnetz geschaltet werden kann, ohne daß ein unerwünschter Einschaltstromstoß auftritt. Dabei soll auch eine Anwendung beim Schalten zeitlich kurz aufeinanderfolgender Impulsgruppen sowie bei Mehrphasen- Wechselstrom möglich sein.

Zur Lösung dieser Aufgabe wird erfindungsgemäß insbesondere vorgeschlagen, daß bei gleichzeitiger Messung zumindest des Blindstromes im Laststromkreis die effektive Spannung an der Last durch Vergrößern der Spannungshalbwellenabschnitte (Stromflußwinkel) solange vergrößert wird, bis ein vorgegebener Blindstromschwellwert auftritt und daß die Last nach Auftreten dieses gemessenen Schwellwertes mit einer zu der vor dem Auftreten des Stromschwellwertes anliegenden Spannung gegenpoligen und in ihrem Effektivwert größeren Spannung beaufschlagt wird, und daß bei Ausbleiben des Stromes in Höhe des Stromschwellwertes der Effektivwert der Spannung bis zu einem Sollwert oder bis zum Nennwert erhöht wird.
Mit diesem Verfahren kann vollkommen unabhängig von der Ausschaltsituation und damit der vorhandenen Remanenzlage zu einem beliebigen Zeitpunkt eingeschaltet werden, ohne daß "Inrush"-Ströme auftreten. Dies wird durch ein stromkontrolliertes Herantasten mittels kleiner "Abfrage-Spannungspulse" - kleine Spannungshalbwellenabschnitte mit entsprechend geringem Effektivwert - erreicht, wobei die effektive Spannung solange gesteigert wird, bis als "Antwort" von der induktivitätsbehafteten Last in ihrer Größe zunehmende Blindstromimpulse auftreten. Aus diesen Stromimpulsen bzw. einem einen Grenzwert überschreitenden Stromimpuls kann insbesondere aufgrund der Polarität dieses Stromimpulses auf die tatsächliche Einschalt-Remanzenzlage rückgeschlossen werden und durch phasenrichtiges Vergrößern des Spannungseffektivwertes -ist schließlich ein Synchronisieren zwischen Remanenzlage und Phasenlage der Wechselspannung möglich.

Eine Verfahrensvariante sieht vor, daß bei gleichzeitiger Messung zumindest des Blindstromes im Laststromkreis, die effektive Spannung an der Last durch Vergrößern der Spannungshalbwellenabschnitte solange vergrößert wird, bis ein vorgegebener Stromschwellwert auftritt, daß die Last nach Auftreten dieses gemessenen Schwellwertes abgeschaltet wird, daß nach einer Pause, die weniger als eine Wechselspannungsperiode betragen kann, mit einer zu der vor dem Auftreten des Stromschwellwertes anliegenden Spannung gleichpoligen und in ihrem Effektivwert kleineren Spannung beaufschlagt wird und daß bei Ausbleiben des Stromes in Höhe des Stromschwellwertes der bei Effektivwert der Spannung bis zu einem Sollwert oder bis zum Nennwert erhöht wird.
Um auch nach einer Pause wieder zu einer definierten Magnetisierungs-Ausgangslage zu gelangen, wird dabei praktisch die vor dem Auftreten des Stromschwellwertes vorhandene, angeschnittene Spannungshalbwelle noch einmal wiederholt und damit die Magnetisierung etwa in den Zustand versetzt, in dem sie sich auch zu Beginn der Pause befand.
Danach kann dann wie in Verbindung mit dem erfindungsgemäßen Verfahren beschrieben, gegenpolig und mit vergrößertem Spannungseffektivwert eingeschaltet werden, ohne daß "Inrush"-Ströme auftreten.

Zur Steigerung des Spannungseffektivwertes kann nach einer Ausgestaltung der Erfindung vorgesehen sein, daß dies an der Last durch unipolares Andimmen, bewirkt durch Verkleinerung des Phasenanschnittwinkels, vorgenommen wird.

Durch das unipolare Andimmen wird die Magnetisierung je nach vorgesehener Polarität der beim Andimmen vorgesehenen Spannungshalbwellen schrittweise von der im Ruhezustand vorhandenen remanenten Induktion an ein Ende der Magnetisierungskurve gebracht, bis in der Nähe der Sättigung der magnetischen Induktion der Strom zunimmt. Dieser Strom ist dann ein Signal, daß eine definierte Magnetisierungsendlage erreicht ist.
Würde man zu diesem Zeitpunkt abschalten, so wäre ohne Stromfluß (Feldstärke H = 0) eine maximale remanente Induktion (Remanenz Br) vorhanden. Beim Einschalten müßte dann diese maximale Remanenz derart berücksichtigt werden, daß eine exakte Zuordnung zwischen der stationären remanenten Induktion und dem zugehörigen Kurvenpunkt in der Magnetisierungskurve (B/H) vorhanden ist. Dies bedeutet, daß bei Auftreten eines etwas größeren Stromimpulses im Bereich der magnetischen Sättigung ab dem in diesem Zeitpunkt vorhandenen Spannungswert, die Wechselspannung eingeschaltet bleiben kann und somit bei der nächsten, gegenpoligen Halbwelle ohne Phasenanschnitt und dann im Einklang mit der Magnetisierung weiterlaufen kann.
Das unipolare Andimmen kann insbesondere dort, wo unterschiedliche, sich ändernde Lasten auftreten und auch für unsymmetrische Lasten, eingesetzt werden. Vorteilhaft ist hierbei auch, daß mit kleinen Effektivspannungen und entsprechend kleinen Strömen gearbeitet werden kann.

Eine andere Möglichkeit, die effektive Spannung beim Einschalten zu vergrößern besteht darin, daß die effektive Spannung an der Last durch bipolares Andimmen, bewirkt durch Verkleinerung des Phasenanschnittwinkels, vorgenommen wird.
Bei diesem Verfahren wird die Magnetisierung nicht zwangsläufig bis in die Nähe der magnetischen Sättigung gebracht, sondern es erfolgt hier nur dann eine Korrekturreaktion, wenn der gemessene Magnetisierungs-Blindstrom den vorgegebenen Wert überschreitet. Dies ist aber nur dann der Fall, wenn die Remanenzgröße und Remanenzpolarität mit dem zugeordneten Induktions-Feldstärke-Wert der Magnetisierungskurve nicht ausreichend genau mit der Einschaltphase der Wechselspannung zusammenpaßt.

Nach einer Weiterbildung der Erfindung ist bei einem dreiphasigen Wechselstromnetz und einer Drehstrom-Last mit drei Wicklungen, die wahlweise in unterschiedlichen Schaltgruppen angeschlossen sind, vorgesehen, daß bei einer im Dreieck oder im Stern geschalteten Schaltgruppe zunächst über zwei Phasen durch Vergrößern der Spannungshalbwellenanschnitte zunehmend bestromt wird, bis der vorgegebene Blindstromschwellwert im Bereich der Eisensättigung erreicht ist, daß dann diese zwei Phasen gegenpolig zu der vor dem Auftreten des Stromschwellwertes anliegenden Spannung eingeschaltet werden und die dritte Phase zeitverzögert zu den beiden anderen Phasen zugeschaltet wird oder daß bei Erreichen des vorgegebenen Blidstromschwellwertes die Bestromung ausgeschaltet wird, daß anschließend zwei Phasen jeweils in der gleichen Polaritätslage und mit einem kleineren Stromflußwinkel der Spannungshalbwellen eingeschaltet werden, welche die jeweiligen vorausgegangenen Strompulse vor dem Erreichen oder Überschreiten des Bildstromschwellwertes der einzelnen Phasen erzeugten und daß anschließend die dritte Phase zeitverzögert zu den beiden anderen Phasen zugeschaltet wird.
Somit lassen sich auch Drehstromtransformatoren "Inrush-frei", d. h. ohne das Auftreten hoher Einschaltstromspitzen einschalten. Auch hier wird zunächst eine Wicklung zunehmend bestromt, bis eine definierte Magnetisierung erreicht ist. Durch das zeitlich abgestufte Zuschalten der dritten Phase bzw. der beiden anderen Wicklungen werden Unsymmetrien vermieden. Die Bestromungspause ist bei Pulsgruppen-Betrieb vorgesehen und kann hierbei weniger als eine Wechselspannungsperiode betragen.

Dabei ist es zweckmäßig, wenn das Einschalten der beiden Phasen bezüglich der nacheilenden Phase mit einem solchen Spannungshalbwellenanschnitt erfolgt, daß dieser einen im Bereich des Leerlaufstromes liegenden Blindstrom-Impuls verursacht, wobei das zeitverzögerte Zuschalten der dritten Phase derart erfolgt, daß die Summe der Blindströme aller drei Phasen zur Vermeidung von Unsymmetrien im weiteren Verlauf etwa 0 ist. Durch diese Maßnahmen werden die sonst durch die vorhandenen Phasenverschiebungen bedingten, vorerwähnten Unsymmetrien vermieden.

Bei einer im Stern mit Mittelpunktleiter geschalteten Schaltgruppe ist vorgesehen, daß zunächst eine erste Phase gegen den Mittelpunktleiter eingeschaltet und durch Vergrößern der Spannungshalbwellenanschnitte zunehmend bestromt wird, bis der vorgegebene Blindstromschwellwert im Bereich der Eisensättigung erreicht ist, daß dann diese Phase gegenpolig zu der vor dem Auftreten des Stromschwellwertes anliegenden Spannung eingeschaltet wird und die beiden anderen Phasen zeitverzögert zu der ersten Phase zugeschaltet werden, wenn die Summe der Blindströme aller drei Phasen etwa 0 ist und in allen drei Phasen gleiche, zueinander symmetrische Ströme fließen oder daß beim Erreichen des Stromschwellwertes die Bestromung ausgeschaltet wird, daß anschließend die erste Phase in der gleichen Polaritätslage und mit einem kleineren Stromflußwinkel der Spannungshalbwelle eingeschaltet wird, welche den vorausgegangenen Blindstromimpuls vor dem Erreichen oder Überschreiten des Blindstromschwellwertes erzeugte und daß dann die beiden anderen Phasen zeitverzögert zu der ersten Phase zugeschaltet werden. Dadurch ist auch bei dieser Drehstrom-Schaltgruppe - Stern mit Mittelpunktleiter - ein "Inrush-freies" Einschalten möglich.

Eine Weiterbildung der Erfindung sieht vor, daß zum Bestimmen des Spannungshalbwellenanschnittes zu Beginn des Einschaltens etwa der Spitzenwert des Leerlaufblindstromes vorgegeben wird, daß die Spannungshalbwellen-Abschnitte bis zum Erreichen des Stromschwellwertes vergrößert werden und daß der zugehörige Spannungsanschnittwinkel abgespeichert wird. Dadurch läßt sich der passende Einschaltzeitpunkt exakt ermitteln.

Bei einer Scheinlast kann dabei der Blindstromanteil und der Wirkstromanteil gemessen werden, wobei der Spannungshalbwellenabschnitt soweit vergrößert wird, bis der Spitzenwert des Blindstromimpulses etwa gleich dem Spitzenwert des Wirkstromimpulses ist und wobei der zugehörige Spannungshalbwellenanschnittwert abgespeichert wird. Dies ermöglicht auch eine gegebenenfalls laufende Anpassung des Einschaltzeitpunktes an unterschiedliche Lasten und die dadurch veränderten Trafoparameter. Eine Weiterbildung der Erfindung sieht vor, daß zur Erkennung der an das Drehstromnetz angeschlossenen Last-Schaltgruppe zunächst eine Phase gegen den Sternpunkt mit großem Phasenanschnittwinkel und entsprechend kleinem Spannungseffektivwert beaufschlagt und dabei eine Stromkontrolle vorgenommen wird. Damit kann selbständig ohne äußeres Zutun die Drehstrom-Schaltgruppe der angeschlossenen Last ermittelt werden.

Die Erfindung betrifft auch eine Vorrichtung zur Begrenzung des Einschaltstromes einer induktivitätsbehafteten, mit einem magnetisierbaren Kern versehenen Last, insbesondere eines Transformators, wobei die Vorrichtung einen in Reihe zur Last geschalteten, mit einer Phasenanschnittsteuerung verbundenen Wechselstromschalter aufweist. Diese Vorrichtung ist insbesondere dadurch gekennzeichnet, daß eine Strommeßeinrichtung zumindest für den im Laststromkreis fließenden Blindstrom vorgesehen ist, daß diese Strommeßeinrichtung sowie die Phasenanschnittsteuerung mit einer Ablaufsteuerung verbunden sind zur Vergrößerung der effektiven Spannung an der Last sowie zur blindstromabhängigen Beeinflussung der Phasenanschnittsteuerung beim Auftreten eines Stromschwellwertes entweder im Sinne einer Veränderung der Polarität der an die Last geschalteten Spannung sowie einer Verkleinerung des Phasenanschnittwinkels oder bei einer nach dem Auftreten eines Stromschwellwertes vorgesehenen Pause, die weniger als eine Wechselspannungsperiode betragen kann, im Sinne einer Wiederholung einer vor dem Auftreten des Stromschwellwertes vorhandenen, angeschnittenen Spannungshalbwelle und anschließender, gegenphasiger Spannungsbeaufschlagung und beim Ausbleiben des Blindstromes in Höhe des Stromschwellwertes im Sinne einer Erhöhung der effektiven Spannung bis zu einem Sollwert beziehungsweise bis zum Nennwert.
Wie bereits in Verbindung mit dem erfindungsgemäßen Verfahren erläutert, ist dadurch ein stromkontrolliertes Vergrößern der Effektivspannung möglich, bis als Reaktion für das Erreichen eines Sättigungsbereiches der Magnetisierung eine vorgegebene Stromschwelle überschritten wird. Dadurch ist dann eine definierte Magnetisierungsendlage erreicht, die dann ein exakt passendes Einschalten der Wechselspannung an die Last ermöglicht.

Eine Ausführungsform der Vorrichtung, bei der durch die Phasenanschnittschaltung die Verbindung der induktivitätsbehafteten Last mit der Netzwechselspannung ab dem Einschaltmoment mit stetig ansteigendem Stromflußwinkel einstellbar ist und wobei eine Blindstrom-abhängige Beeinflussung der Phasenanschnittsteuerung beim Auftreten eines Stromschwellwertes im Sinne einer Veränderung der Polarität der an die Last geschalteten Spannung sowie einer Verkleinerung des Phasenanschnittwinkels vorgesehen ist, sieht vor, daß eine in Reihe mit der induktivitätsbehafteten Last geschaltete Komparatorschaltung vorgesehen ist, deren Ausgang mit der Phasenanschnittschaltung verbunden ist, daß die Phasenanschnittschaltung bei einer Beaufschlagung mit einem von der Komparatorschaltung erzeugten Primärkreis-Überstromsignal die Steuerelektrode des Wechselstromschalters für mindestens eine Halbwelle mit einem Zündsignal mit einem vorbestimmten, Remanenz-setzenden Phasenanschnittwinkel beaufschlagt, wobei der Remanenz-setzende Phasenanschnittwinkel kleiner als der dem Auftreten des Primärkreisüberstromsignals zuordbare Anschnittwinkel ist und daß in der Phasenanschnittschaltung in den den Remanenz-setzenden Halbwellen folgenden Halbwellen jeweils ein Zündsignal bei dem vorbestimmten Phasenanschnittwinkel erzeugbar ist.

Durch eine auf die besonderen Eigenheiten der angeschalteten Last, insbesondere eines Transformators eingehende Vorherbestimmung der die Remanenz-setzenden Einschalt-Phasenlage ist eine synchronisierte Zündspannung erzeugbar, mit der der Wechselstromschalter der versorgungsspannungsgepufferten Phasenanschnittschaltung zündbar ist.
Durch diesen auf einen Überstrom folgenden ersten Anschnitt ist die Remanenz derart setzbar, daß im Anschluß der Dimmbetrieb mit seinem gegebenenfalls festen Anschnittwinkel eingeschaltet werden kann.

In einer vorteilhaften Ausgestaltung der Erfindung ist eine Überstrom- und Unterstromsicherung vorgesehen, wobei zumindest ein Lastfehlererkennungsschaltkreis vorgesehen ist, der beim Überschreiten und/oder beim Unterschreiten eines Sollstrombereiches den Wechselstromschalter sicher öffnet. Dadurch wird insbesondere bei Halogen-Leuchten eine unter Umständen bestehende Brandgefahr durch Übergangswiderstände verhindert, die zum Beispiel an den Übergangsstellen von verspannten Leitungen auf die überlicherweise an diesen festgeklemmten Lampenhalterungen auftreten können. Mit dieser Überstrom-/Unterstromsicherung wird auch der Normenentwurf VDE 0711 Teil 500 für Niederspannungsbeleuchtungssystem erfüllt.

Eine andere Ausführungsform der erfindungsgemäßen Vorrichtung sieht vor, daß die Phasenanschnittschaltung die Verbindung der induktivitätsbehafteten Last mit der Wechselspannung nur mit unipolaren Phasenanschnitten herstellt und daß die Phasenanschnittschaltung bei einer Beaufschlagung mit einem von der Komparatorschaltung erzeugten Primärkreis -Überstroms ignal die Steuerelektrode des Wechselstromschalters für die zeitlich unmittelbar folgende, entgegengesetzt gepolte Halbwelle und die unmittelbar nächsten folgenden Vollwellen mit einem Zündsignal von 150 ° bis 180 ° beaufschlagt und daß in der Phasenanschnittschaltung bei den darauf folgenden Halbwellen jeweils ein Zündsignal mit einem vorbestimmten Phasenanschnittwinkel erfolgt ist.
Durch die Verwendung von im Periodenabstand aufeinanderfolgenden, unipolaren angeschnittenen Halbwellen, deren Winkelwert langsam anwächst, wird das induktivitätsbehaftete Stromversorgungsgerät, zum Beispiel ein Transformator, unabhängig von der ursprünglichen Einschalt-Phasenlage und Lage der Remanenz im Transformator, in eine definierte, der Schaltung bekannte Lage der Remanenz gebracht. Nach einer von der Bauart des Stromversorgungsgerätes abhängigen Anzahl von angeschnittenen Halbwellen tritt ein kleiner, die Schaltung und die Sicherung nicht gefährdender Einschaltspitzenstrom als Antwort des Transformators auf, daß seine Remanenz richtig gesetzt ist. Dadurch ist in der Anschnittsteuerschaltung eine Zündspannung erzeugbar, mit der der Wechselstromschalter der versorgungsspannungsgepufferten Phasenanschnittschaltung für die unmittelbar darauffolgenden, entgegengesetzt gepolten Halbwelle zündbar ist. Durch die auf einen kleinen Überstromimpuls folgende erste voll durchgeschaltete Halbwelle wird der Normalbetrieb des Transformators eingeleitet. Die Induktions-Verhältnisse entsprechen dabei zu diesem Zeitpunkt denen des stationären Betriebes. Nach einigen Perioden mit Vollwellenbetrieb stellt die Schaltung dann gegebenenfalls den gewählten Phasenwinkel für den Dimmbetrieb selbsttätig, mit fließendem Übergang ein.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: ein Blockschaltbild zum Betreiben einer induktionsbehaften Last an einem Einphasenwechselstromnetz,
- Fig. 2: ein Blockschaltbild zum Betreiben einer Drehstrom-Last an einem dreiphasigen Wechselstromnetz,
- Fig. 3: ein Blockschaltbild mit detaillierter Darstellung der in Fig. 2 gezeigten Funktionsblöcke,
- Fig. 4 bis 7: Innenbeschaltungen von in Fig. 3 gezeigten Funktionsblöcken,
- Fig. 8 bis 10: Diagramm-Zuordnungen mit Darstellung der Funktionsabläufe beim Betreiben von Drehstromlasten in unterschiedlichen Schaltgruppen,
- Fig.11: Signalkurven der Netzspannung sowie des Netzstromes beim Einschalten eines Transformators mit einem Dimmer,
- Fig.12: ein Blockschaltbild einer Vorrichtung zum Begrenzung von Einschaltstromspitzen auf der Primärseite eines Transformators beim Dimmbetrieb,
- Fig.13: Verläufe von Spannungssignalen und Stromsignalen bei Einschaltvorgängen an Transformatoren mit einem Dimmer bei unterschiedlicher, undefinierter Remanenz des Transformators,
- Fig.14: ein Blockschaltbild einer Vorrichtung zum Begrenzen von Einschaltstromspitzen auf der Primärseite eines Transformators beim Dimmbetrieb in einem weiteren Ausführungsbeispiel,
- Fig.15: ein Blockschaltbild einer Vorrichtung zum Begrenzen von Einschaltstromspitzen auf der Primärseite eines Transformators beim Dimmbetrieb in einer abgewandelten Ausführungsform und
- Fig.16: Signalkurven der Netzspannung sowie des Netzstromes bei dem Einschalten eines Transformators mit einer Vorrichtung gemäß Fig. 15.

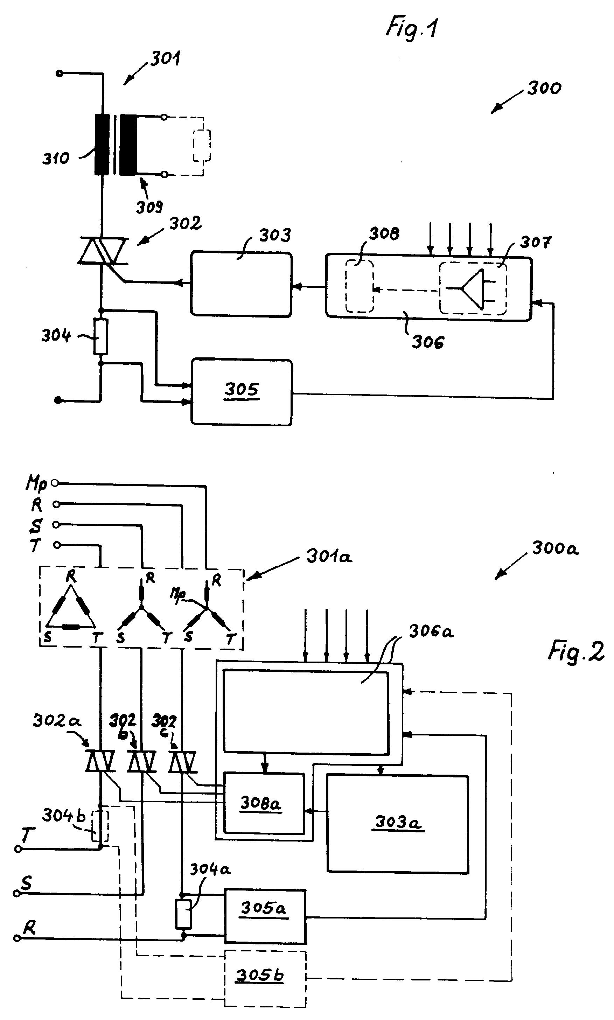

Eine in Fig. 1 gezeigte Vorrichtung 300 zeigt die wesentlichen Baugruppen zum Betreiben einer induktivitätsbehafteten und mit einem magnetisierbaren Kern versehenen Last 301 an einem Wechselstromnetz. Mit Hilfe der dargestellten Baugruppen können Einschaltstromspitzen im Laststromkreis vermieden werden.
In Reihe mit der induktivitätsbehafteten Last 301 ist ein Wechselstromschalter 302, im vorliegenden Ausführungsbeispiel ein Triac geschaltet, der mit einer Phasenanschnittsteuerung 303 verbunden ist.
Außer dem Wechselstromschalter 302 befindet sich in dem Laststromkreis noch ein Strommeßshunt 304, an den eine Strommeßeinrichtung 305 angeschlossen ist.
Zu der Steuerungseinrichtung für den Wechselstromschalter 302 gehört außer der Phasenanschnittsteuerung 303 und der Strommeßeinrichtung 305 noch eine Ablaufsteuerung 306. Diese beinhaltet unter anderem einen Komparator 307, mit dem im wesentlichen ein Vergleich zwichen einer Stromvorgabe und dem tatsächlich am Strommeßshunt 304 gemessenen Ist-Strom durchgeführt wird. Weiterhin beinhaltet die Ablaufsteuerung 306 noch eine Zündlogik 308.
Die Ablaufsteuerung 306 hat außer dem von der Strommeßeinrichtung 305 kommenden Eingang eine ganze Reihe weiterer Steuereingänge, die durch Pfeile angedeutet sind und beispielsweise für die Vorgabe eines Start/Stopsignals, für den Sollanschnittwinkel, gegebenenfalls für eine übergeordnete Steuerung usw. dienen.
Die induktivitätsbehaftete Last 301 ist im Ausführungsbeispiel ein Transformator, wobei der Laststromkreis die Primärseite des Transformators bildet. An die Sekundärseite 309 können unterschiedliche Sekundärlasten - ohmische, induktive, kapazitive oder Mischlasten - angeschlossen sein.

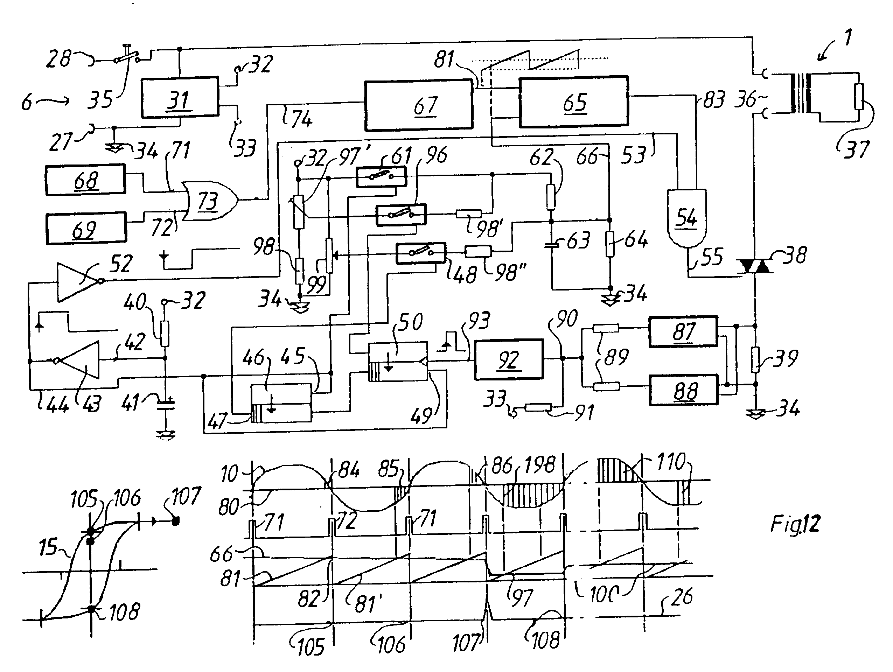

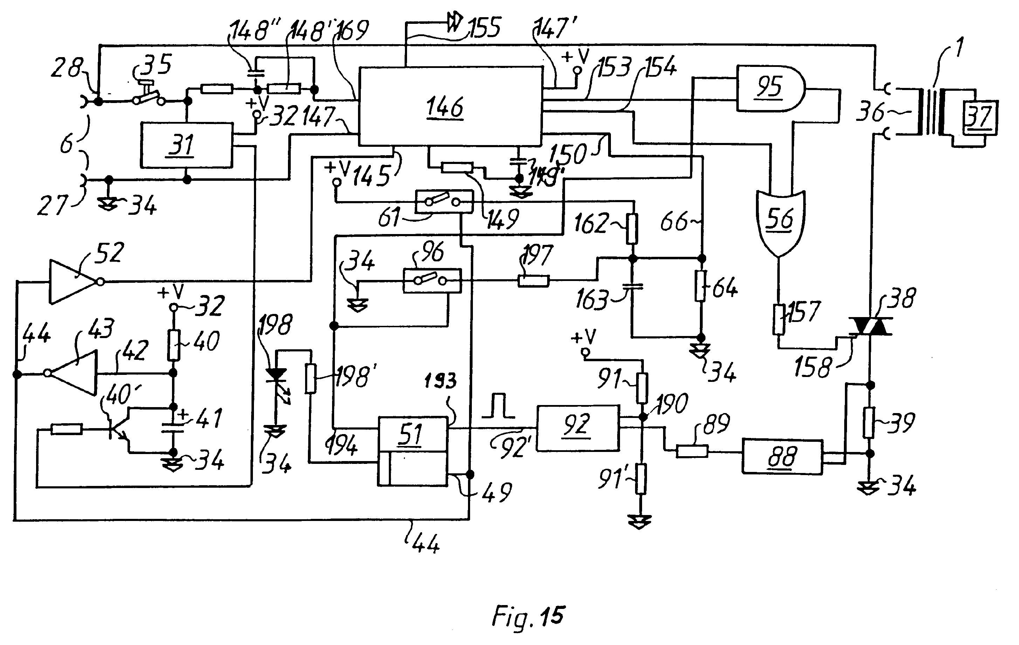

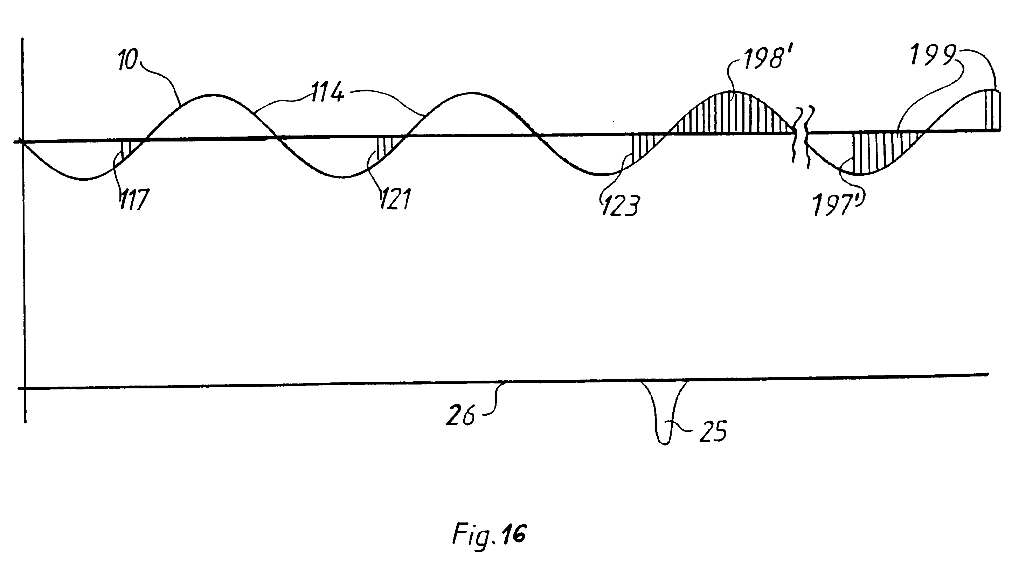

Bei an den Laststromkreis angelegter Netzwechselspannung wird zunächst die effektive Spannung an der durch die Primärwicklung 310 des Transformators gebildeten Last 301 vergrößert, indem mit Hilfe der Phasenanschnittsteuerung 303 die Spannungshalbwellenabschnitte vergrößert werden. Gleichzeitig wird der Strom im Laststromkreis mit Hilfe des Strommeßshuntes 304 und der angeschlossenen Strommeßeinrichtung 305 überwacht. Wird dabei ein bei der Ablaufsteuerung 306 bzw. dem Komperator 307 vorgegebener Stromschwellwert überschritten, ist dies ein Zeichen dafür, daß sich die Magnetisierung des Transformatorkernes im Sättigungsbereich befindet. Aus der Polarität des aufgetretenen Stromimpulses ist auch die Magnetisierungspolung erkennbar und es kann zur Vermeidung eines hohen Einschaltspitzenstromes reagiert werden. Dies erfolgt, indem gegenpolig zu der Spannungshalbwelle, bei dem der Stromschwellwert aufgetreten war, der Effektivwert der Spannung wesentlich erhöht wird.
Im einzelnen ist dies noch anhand der Diagramme gemäß Fig. 12, 13 und 16 noch näher erläutert.
Das Vergrößern der effektiven Spannung an der Last kann entweder durch unipolares Andimmen, bewirkt durch Verkleinerung des Phasenanschnittwinkels vorgenommen werden, wie dies im Ausführungsbeispiel gemäß Fig. 15 und 16 beschrieben ist. Andererseits besteht aber auch die Möglichkeit, die Vergrößerung der effektiven Spannung an der Last durch symmetrisches, bipolares Andimmen, bewirkt durch Verkleinerung des Phasenanschnittwinkels vorzunehmen. Dies ist bei dem Ausführungsbeispiel gemäß Fig. 12 bis 14 beschrieben.

Fig. 2 zeigt eine Vorrichtung 300a, mit der eine Drehstromlast an einem dreiphasigen Wechselstromnetz betrieben werden kann, wobei auch hier die Drehstromlast eine induktivitätsbehaftete und mit einem magnetisierbaren Kern versehene Last ist. Es handelt sich bevorzugt um einen Transformator, wobei insbesondere unsymmetrische Drehstromkerntrafos mit drei Schenkeln zum Einsatz kommen. Diese Drehstromtransformatoren können in unterschiedlichen Schaltgruppen - Dreieck, Stern, Stern mit Mittelpunktleiter - geschaltet sein, wie dies in Fig. 2 alternativ nebeneinander angedeutet ist. Der prinzipielle Aufbau der Vorrichtung 300a ist vergleichbar mit der in Fig. 1 dargestellten Vorrichtung 300. In Abweichung dazu sind hier jedoch in jeder Phase (RST) durch Triacs oder antiparallel geschaltete Thyristoren gebildete Wechselstromschalter 302a, 302b und 302c vorgesehen.
Die Strommeßeinrichtung 305a ist mit einem in einer der drei Phasen (hier in Phase T) befindlichen Strommeßshunt 304a verbunden. Für eine Einschaltstromstoßbegrenzung genügt eine Strommessung in einer der drei Phasen. In Fig. 2 ist strichliniert noch eine weitere Strommeßeinrichtung 305b mit zugehörigem, in der Phase R befindlichen Strommeßshunt 304b eingezeichnet, die Teil einer Überstromsicherung sind. Für eine solche Überstromsicherung genügt bei einer Dreiecksschaltung und bei einer Sternschaltung eine Strommessung in zwei Phasen während bei einer Sternschaltung mit angeschlossenem Mittelpunktleiter eine Strommessung in allen drei Phasen vorgesehen sein müßte.

Um einen unerwünschten Einschaltstromstoß bei der in Fig. 2 gezeigten Vorrichtung 300a zu vermeiden, wird bei der Dreieckschaltung über zwei Phasen eine Wicklung, bei Sternschaltung über zwei Phasen zwei Wicklungen und bei Stern-mit Mp-Schaltung über eine Phase eine Wicklung der Drehstromlast bestromt. Dies erfolgt zunächst ebenfalls mit sehr geringen Spannungs-Effektivwerten und bei gleichzeitiger Messung des Stromes wird durch Vergrößern der Spannungshalbwellenabschnitte zunehmend bestromt. Befindet sich die Magnetisierung des Transformatorenkernes im Bereich der Eisensättigung, kann die Bestromung abgeschaltet werden. Anschließend werden bei Dreieck oder Sternschaltung ohne Mp zwei Phasen oder bei Sternschaltung mit Mp eine Phase jeweils in der Spannungs-Polaritätslage eingeschaltet, die jeweils bei dem zugehörigen, vorausgegangenen Blindstromschwellwert der einzelnen Phasen bei den Strompulsen vorhanden war. Schließlich wird die dritte Phase oder bei Sternschaltung mit Mp die zweite und die dritte Phase zeitverzögert zu der bzw. den Phasen zugeschaltet, wobei die Zeitverzögerung so eingestellt ist, daß die Summe der Blindströme aller drei Phasen bei dem Einschalten und auch danach etwa 0 ist.

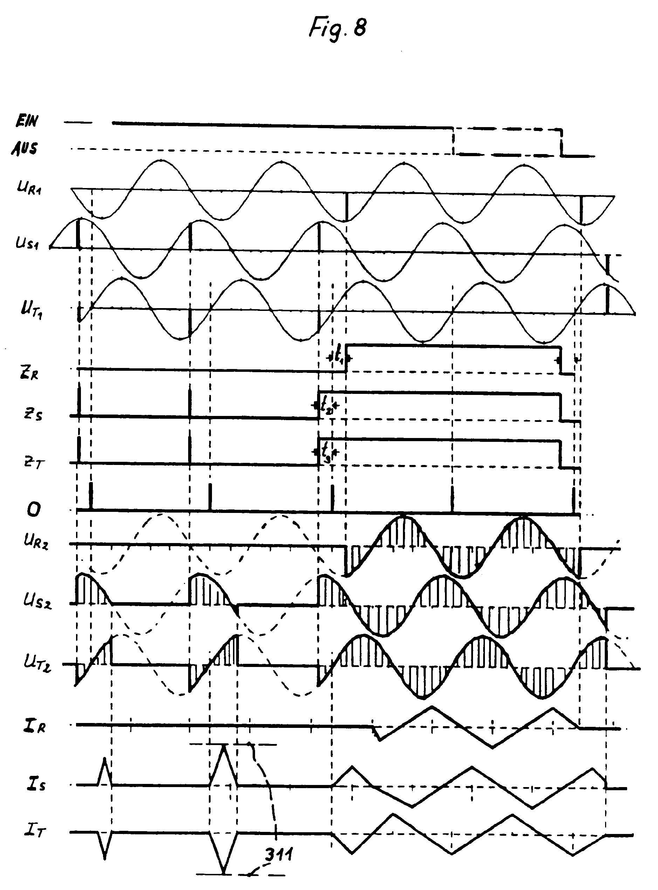

Fig. 8 zeigt einander auf einer Zeitachse (Abszisse) zugeordnete Diagramme, wobei in der ersten Zeile ein Ein-Aussignal gezeigt ist. Die nächsten drei Zeilen zeigen die drei phasenversetzten Drehstrom-Wechselspannungen in den Phasen R, S und T. Die darunter befindlichen drei Zeilen zeigen den einzelnen Phasen zugeordnete Zündsignale Z_{R}, Z_{S}, Z_{T}. Die nächste Zeile gibt jeweils den Zeitpunkt der Nulldurchgänge der Phase T wieder. Es schließen sich drei Zeilen mit den Spannungsverläufen der drei durch die Phasenanschnittsteuerung 303a (Fig. 2) geschalteten Phasenspannungen an. Die letzten drei Zeilen zeigen die in den einzelnen Phasen R, S, T auftretenden Ströme.
Fig. 8 zeigt die Zusammenhänge in Verbindung mit einer im Dreieck geschalteten Drehstromlast.
Zunächst wird durch kleine, zunehmende, im vorliegenden Ausführungsbeispiel unipolare Spannungshalbwellenanschnitte der Phasen S und T eine Wicklung der Drehstromlast bestromt. Die nach dem jeweiligen Spannungsnulldurchgang vorhandenen unterschiedlich großen Spannungshalbwellenabschnitte ergeben sich durch die noch bis zum Ende der Strompulse leitenden Halbleiterschalter. Maßgebend für die Entstehung der Strompulse sind die vor den Nulldurchgängen jeweils erzeugten Spannungshalbwellenanschnitte. Die bei jeder angeschnittenen Spannungshalbwelle auftretenden Phasenströme I_{S} und I_{T} sind in den letzten beiden Zeilen der Fig. 8 erkennbar. Da mit Hilfe der beiden Phase S und T eine Wicklung der Drehstromlast bestromt wird, sind zwangsläufig die jeweils auftretenden Strompulse gleich groß und gegenpolig. Wird nun ein vorgegebener Stromschwellwert 311 (vgl. letzte beiden Zeilen in Fig. 8) erreicht, wird im vorliegenden Falle die Bestromung kurz unterbrochen. Anschließend werden die beiden Phasen S und T wieder in der Polaritätslage eingeschaltet, die auch die jeweiligen Strompulse beim Erreichen oder Überschreiten des Blindstromschwellwertes 311 hatten. Diese Polaritätslage der eingeschalteten Spannungsanschnitte entspricht dann auch der Polaritätslage der den Strompulsen vorauseilenden und zu deren Erzeugung vorhandenen Spannungshalbwellenanschnitten.
Der zugehörige Spannungshalbwellenanschnittswinkel ist beim Einschalten der beiden Phasen S und T etwas größer - entsprechend einem kleineren Stromflußwinkel - da der Stromschwellwert 311 zum deutlicheren Erkennen oberhalb des maximalen Blindstromwertes liegt, der bei der größten Induktion auftritt. Die größte Induktion ist jeweils bei den Umkehrpunkten der Magnetisierungskurve vorhanden. Da der Stromschwellwert 311 aus den vorgenannten Gründen schon etwas außerhalb dieser Magnetisierungskurve-Umkehrpunkte und damit im Sättigungsbereich liegt, wird beim Einschalten der beiden Phasen S und T der Stromflußwinkel etwas zurückgenommen, damit man tatsächlich möglichst exakt an einem der Umkehrpunkte der Magnetisierungskurve mit einem dazu "synchronisierten" Bestromen beginnt. Wie bereits vorerwähnt, wird die dritte Phase R zu einem Zeitpunkt derart zugeschaltet, daß im weiteren Verlauf die Summe der Blindströme der einzelnen eingeschalteten Phasen etwa 0 ist.

Prinzipiell könnte zu einem beliebigen Zeitpunkt ausgeschaltet werden, da durch das erfindungsgemäße Verfahren die Lage der Remanenz nicht bekannt sein muß.

Bei einem Betrieb des Drehstromtransformators mit Pulsgruppen ist es jedoch, insbesondere bei nur kleinen Zeitabständen zwischen den einzelnen Pulsgruppen vorteilhaft, wenn zu einer definierten Magnetisierungslage ausgeschaltet wird. Dementsprechend kann dann ohne "Herantasten" an eine definierte Magnetisierungslage in Kenntnis des Ausschaltzeitpunktes auch direkt wieder zu einem bestimmten Zeitpunkt eingeschaltet werden. Somit treten keine Einschaltstromspitzen jeweils zu Beginn der Pulsgruppe auf, so daß die einzelnen Pulsgruppen sehr nahe beieinander liegen können.
Im Ausführungsbeispiel ist gemäß Fig. 8 die Phase T als Bezugsphase gewählt worden, wobei deren Nulldurchgang als Kenngröße dient. Um hierbei einen für den vorgesehenen Einschaltzeitpunkt passenden Ausschaltzeitpunkt zu erhalten, wird der Nulldurchgang des Stromes der Phase T von Minus nach Plus herangezogen. Für die Spannungsverläufe der einzelnen Phasen ergeben sich dann die gleichen Lagen wie nach dem "Remanenz-Setzen", wo der Stromschwellwert auftrat.
Versuche an einem bestimmten Trafo in Dreieckschaltung haben gezeigt, daß die zwei Phasen, die zuerst eingeschaltet werden sollen - hier die Phase S und T - etwa drei Millisekunden (t₂, t₃) vor dem Nulldurchgang der Bezugsphase eingeschaltet werden und daß die dritte Phase etwa drei Millisekunden (t₁) nach dem Nulldurchgang der Bezugsphase eingeschaltet wird. Diese Verzögerungszeiten t₁ bis t₃ sind in den Zeilen 5 bis 7 (Z_{R}, Z_{S}, Z_{T}) eingezeichnet.

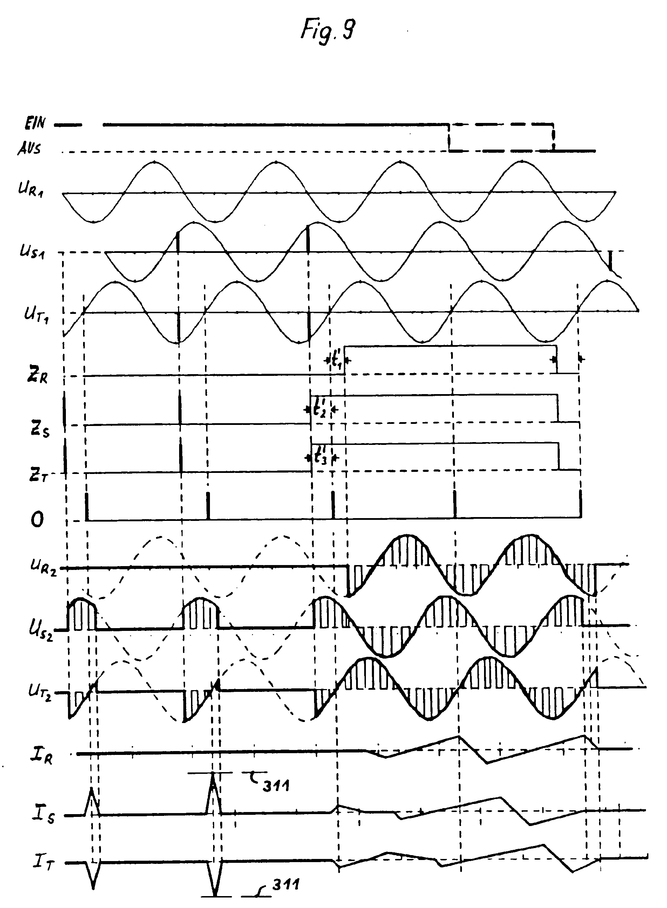

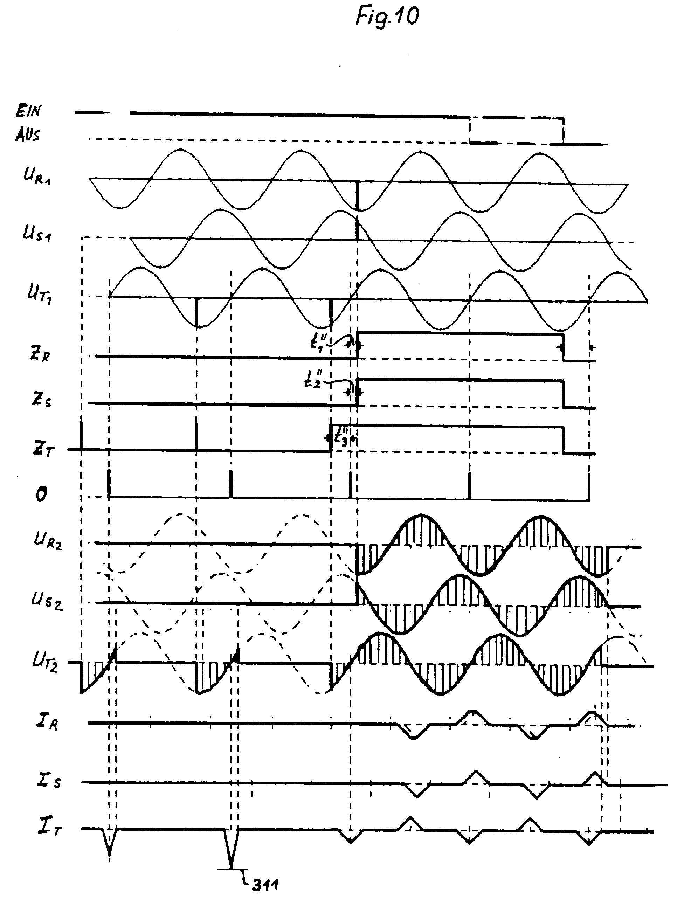

Die in Fig. 8 und auch in den Fig. 9 und 10 vorgesehenen Bestromungspausen zwischen dem ersten Bestromen bis zum Auftreten eines Stromschwellwertes und dem tatsächlichen Einschalten sind hier zur Verdeutlichung vorgesehen und nicht unbedingt erforderlich. Dementsprechend könnten sich in Fig. 8 und 9 an die beiden zum Erzeugen des Schwellwertes benötigten, angeschnittenen Spannungshalbwellen der Phasen S und T gegenphasige, kontinuierliche, aber mit höherem Effektivwert durchgeschaltete Spannungshalbwellen anschließen. Wird jedoch wie hier vorgesehen, eine Bestromungspause vorgesehen, so ist es auch erforderlich, entsprechend der dann vorhandenen, maximalen Remanenzlage die Bestromung auch in einem Umkehrpunkt der Magnetisierungskurve, die dann dem entsprechenden maximalen Remanenzpunkt zugeordnet ist, zu beginnen. Dementsprechend sind dann die Startpunkte der einzelnen Spannungsverläufe gegenüber dem vorherigen Endpunkt vorverlegt.

Fig. 9 zeigt eine Diagrammzuordnung für eine im Stern geschaltete Drehstromlast. Prinzipiell sind hier die gleichen Verhältnisse vorhanden wie bei der Dreieckschaltung, die der Fig. 8 zugrunde gelegt wurde mit dem geringfügigen Unterschied, daß sich hier durch die Sternschaltung beim Einschalten von zwei Phasen ein Bestromen von zwei in Reihe geschalteten Wicklungen ergibt. Dementsprechend ergeben sich hier auch geringere Phasenströme. Die Einschaltzeiten der einzelnen Phasen bezogen auf den Nulldurchgang der auch hier als Bezugsphase vorgesehenen Phase T sind etwas anders als bei der Dreieckschaltung und es hat sich für t₁′ ein günstiger Wert von 2,7 Millisekunden für t₂′ 3,5 Millisekunden und für t₃′ ebenfalls 3,5 Millisekunden herausgestellt.
Auch hier wird die dritte Phase - im Ausführungsbeispiel die Phase R - zeitverzögert zu den beiden anderen Phasen S und T zu einem Zeitpunkt zugeschaltet, wo sich als Summe der Blindströme in allen drei Phasen im weiteren Verlauf etwa 0 ergibt.

Fig. 10 zeigt schließlich ein mit Fig. 8 und 9 vergleichbares Diagramm, bei dem eine Sternschaltung mit Mittelpunktleiter zugrundegelegt ist. In diesem Falle wird zunächst eine erste Phase gegen den Mittelpunktleiter eingeschaltet und es erfolgt durch Vergrößern der Spannungshalbwellenanschnitte auch hier ein zunehmendes Bestromen, bis der vorgegebene Blindstromschwellwert im Bereich der Eisensättigung erreicht ist. Ab dem Auftreten dieses Stromschwellwertes könnte diese erste Phase voll eingeschaltet werden und die beiden anderen Phasen werden dann zugeschaltet, wenn die Summe der Blindströme aller drei Phasen auch hier etwa 0 ist. Eine passende Verzögerung zwischen dem Einschalten der ersten Phase und dem Zuschalten der beiden anderen Phasen kann etwa 1,5 Millisekunden entsprechen (t₁˝ und t₂˝). Wird nach dem Remanenz-Setzen, also dem zunehmenden Bestromen bis zum Auftreten eines Stromschwellwertes, ausgeschaltet, wie im Diagramm nach Fig. 10 gezeigt, startet die zuerst bestromte Phase nicht zum Ausschaltzeitpunkt sondern etwas zurückverlagert, wobei sich ein Zeitabstand t₃˝ zum Nulldurchgang der Bezugsphase T von etwa 4,5 Millisekunden als günstig erwiesen hat. Auch hier erfolgt das Vorverlagern des Einschaltens dieser ersten Phase, um eine Zuordnung zwischen dem statischen Wert der vorhandenen maximalen Remanenz und dem zugehörigen Magnetisierungsumkehrpunkt zu haben.
Zum Bestimmen des Spannungshalbwellenanschnittes zu Beginn des Einschaltens kann etwa der Spitzenwert des Leerlaufblindstromes vorgegeben sein. Der zugehörige Spannungsanschnittwinkel kann dann abgespeichert werden und steht dann jeweils beim Einschalten zur Verfügung.

Die Einschaltzeitpunkte bzw. Verzögerungszeiten beim Einschalten der einzelnen Phasen sind Einstellwerte, die abhängig sind vom Transformatorentyp, der Schaltgruppe und auch davon, ob der Transformator im Leerlauf oder unter Last bzw. unter variabler Last betrieben wird. Beim Betrieb an einer gleichmäßigen Last bleibt die Einstellung gleich und kann einmal eingestellt bleiben.
Es besteht aber auch die Möglichkeit, daß eine automatische Anpassung vorgenommen wird. Da der Trafo mit seiner sekundären Last eine Scheinlast darstellt wird dazu der Blindstromanteil und der Wirkstromanteil gemessen und der Spannungshalbwellenanschnitt soweit vergrößert, bis der Spitzenwert des Blindstromimpulses etwa gleich dem Spitzenwert des Wirkstromimpulses ist. Der zugehörige Spannungshalbwellenanschnittwert ist dann der für diesen Lastfall passende. Über eine Selbsteinstelleinrichtung kann der Spannungshalbwellenanschnitt während des Betriebes (zum Beispiel mit Pulsgruppen) laufend korrigiert und an sich gegebenenfalls ändernde Lastverhältnisse angepaßt werden. Unerwünschte Einschaltstromstöße werden damit sicher vermieden.

Die erfindungsgemäße Vorrichtung kann-bei der Drehstrom-Ausführung auch mit einer Schaltgruppen-Erkennungseinrichtung ausgerüstet sein, die eine Folgesteuerung zum zeitlich versetzten Bestromen der einzelnen Phasen aufweist. Wird nun zunächst eine Phase mit großem Phasenanschnittwinkel und entsprechend kleinem Spannungseffektivwert beaufschlagt und dabei eine Stromkontrolle vorgenommen, so kann im Falle, daß kein Strom fließt darauf geschlossen werden, daß hier eine Dreieckschaltung oder eine Sternschaltung ohne Mittelpunktleiter vorliegt. Es werden dann anschließend zwei Phasen bestromt und aus dem sich einstellenden Stromfluß läßt sich ermitteln, ob eine Dreieckschaltung vorliegt (bei größerem Stromfluß) oder eine Sternschaltung, bei der durch Reihenschaltung von zwei Wicklungen ein gegenüber der Dreieckschaltung verminderter Strom fließen würde.

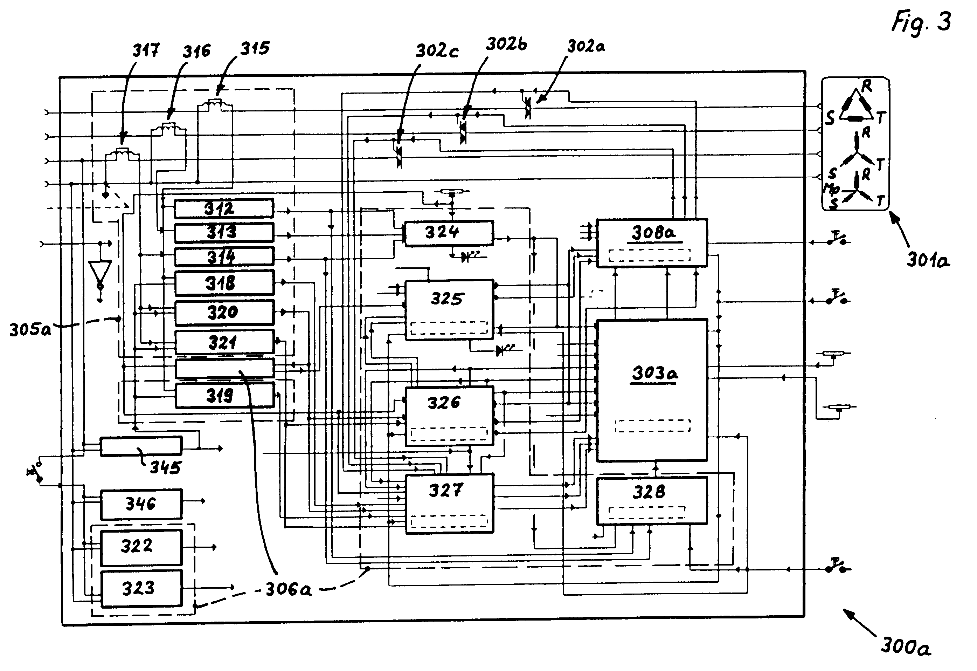

Fig. 3 zeigt in einer gegenüber Fig. 2 etwas detaillierterer Form ein Blockschaltbild, in dem die vier auch in Fig. 2 dargestellten Funktionsblöcke erkennbar sind. Zu einem dieser Funktionsblöcke zugehörige Unterblöcke sind durch strichlinierte Umrandungen zusammengefaßt. Es sind auch hier die Ablaufsteuerung 306a, die Phasenanschnittsteuerung 303a, die Zündlogik 308a sowie die Strommeßeinrichtung 305a erkennbar.
Die Strommeßeinrichtung 305a beinhaltet drei Stromverstärker 312 bis 314 für die drei Phasen R, S, T. An diese Stromverstärker sind in den einzelnen Phasen R, S und T befindliche Stromwandler 315 bis 317 angeschlossen. An den Stromwandler 315 ist außer dem Stromverstärker 312 noch eine Blindstrommeßeinrichtung 318 sowie eine Wirkstrommeßeinrichtung 319 angeschlossen.
An den Stromwandler 317 ist außer dem Stromverstärker 314 auch noch eine Blindstrommeßeinrichtung 320 und eine Wirkstrommeßeinrichtung 321 angeschlossen.

Zur Ablaufsteuerung 306a gehören die Blöcke 322 bis 328. In dem Block 322 wird ein Netz-Einschaltimpuls erzeugt. Der Block 323 beinhaltet eine Unterspannungserkennung. Wenn eine Unterspannung oder der Ausfall einzelner Halbwellen vorliegt, wird damit ausgeschaltet.
Der Block 324 beinhaltet eine Überstromerkennung. Diese ist mit einem Pulspausenerzeugungs-Block 328 verbunden. Bei einem Überstrom wird bei Pulsgruppenbetrieb die zwischen den einzelnen Pulsgruppen befindliche Pause durch die Höhe des Überstromes beeinflußt, indem die Pulspausen bei größer werdendem Überstrom entsprechend vergrößert werden.

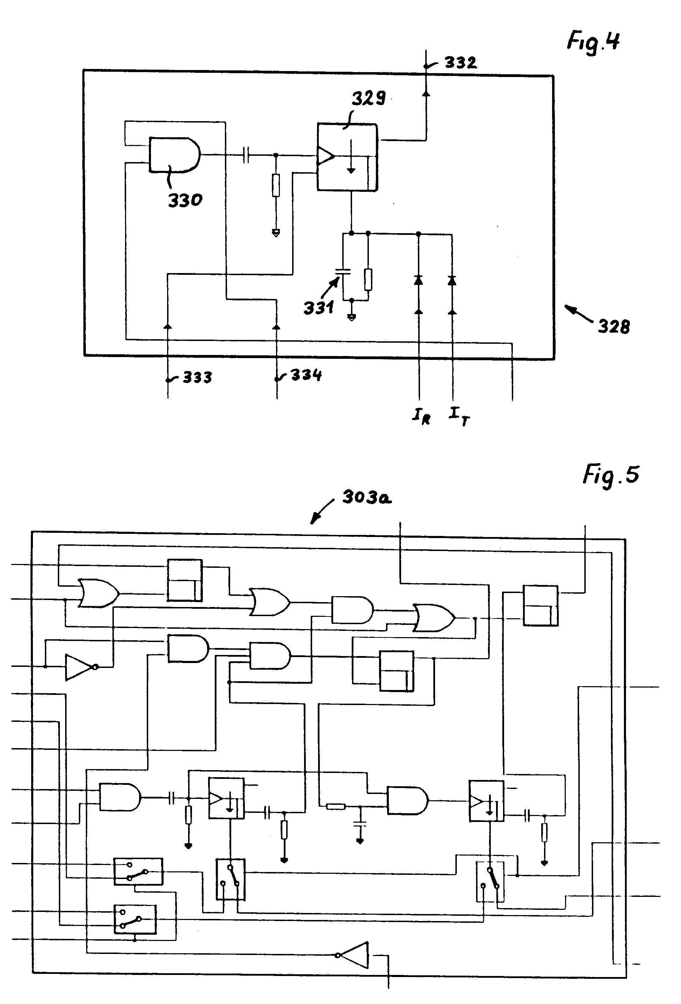

Fig. 4 zeigt die im Block 328 enthaltene Schaltung. Sie weist im wesentlichen ein zeitvariabel steuerbares Monoflop 329 sowie ein Und-Glied 330 auf. Ein an das Monoflop 329 angeschlossener Kondensator 331 wird in Abhängigkeit des Überstromes über die Anschlüsse I_{R} und I_{T} auf eine entsprechende Spannung proportional dem Überstrom aufgeladen. Der Zeitablauf des Monoflops 329 ist von dieser Spannung abhängig und das Monoflop liefert dementsprechend an seinem Ausgang 332 ein Signal zur Bestimmung der Pause zwischen aufeinanderfolgenden Pulsgruppen, das proportional zur Überstromgröße ist. An den Eingang 333 kann ein Netz-Einschaltsignal und an den Eingang 334 ein Überstrom-Einschaltsignal zur Aktivierung dieser Vorrichtung angelegt werden.

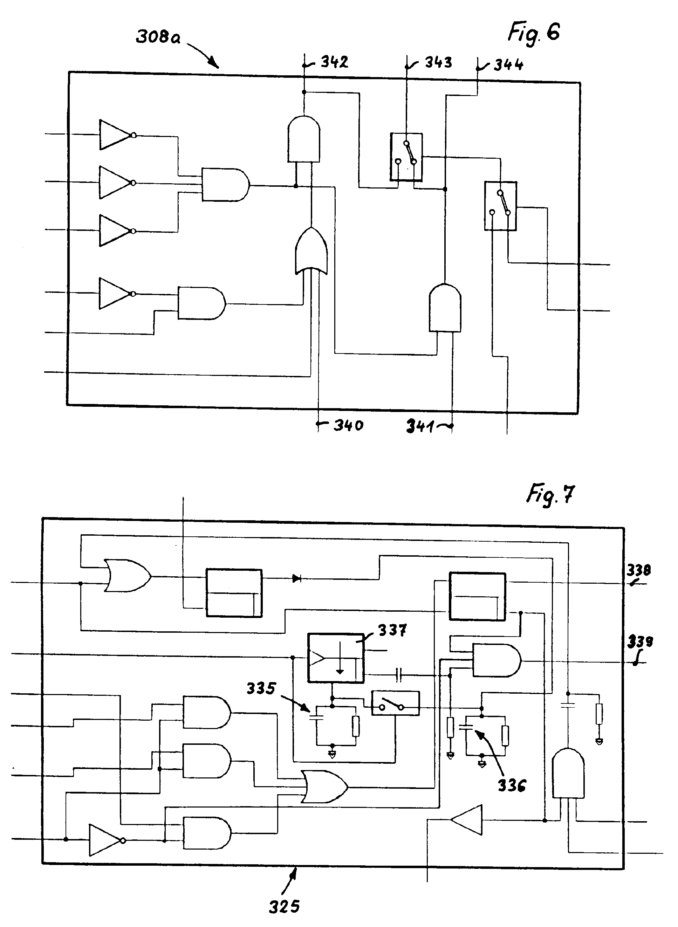

Der in Fig. 3 mit 325 bezeichnete Funktionsblock gehört ebenfalls mit zur Ablaufsteuerung 306a. Die Innenschaltung dieses Blockes 325 ist in Fig. 7 gezeigt. Bei Handeinstellbetrieb steuert dieser Block 325 das Setzen der Remanenz und erzeugt dazu die Zündsignale für das Bestromen der Referenz-Phase, im vorliegenden Falle für die Phase T. Ein Kondensator 335, der die Verzögerung zur Zündsignalerzeugung für den größer werdenen Spannungseffektivwert steuert, wird bei jedem Nulldurchgang der Phase T erneut auf die Spannung des Kondensators 336 aufgeladen, dessen Spannung einer, ab dem Beginn des Einschaltens fallenden Spannungsrampe, folgt. Dadurch wird die Verzögerungs-Zeit des Monoflops 337 immer kürzer und damit der Phasenanschnitt der Phase T immer größer. Wenn über den Eingang 338 die Information ansteht, daß die Remanenz gesetzt ist, werden über den Ausgang 339 keine RemanenzsetzPulse mehr erzeugt.
Die übrigen Bauelemente sind Verknüpfungsglieder zur Verarbeitung verschiedener Eingangssignale, die für den Funktionsablauf erforderlich sind.

Der Funktionsblock 326 dient für eine erste Selbsteinstellung der Vorrichtung, wobei zunächst ein Schaltgruppentest vorgenommen wird. Hierbei wird, wie bereits vorbeschrieben, ermittelt, welche Schaltgruppe angeschlossen ist.
Anschließend wird durch die Ablaufsteuerung festgestellt, ob ein Leerlaufbetrieb oder ein Lastbetrieb vorliegt. Dies wird ermittelt, indem eine Wirkstrommessung und eine Blindstrommessung vorgenommen wird. Je nach Meßergebnis kann dann darauf geschlossen werden, ob ein Leerlaufbetrieb (im wesentlichen nur Blindstrom) oder ein Lastbetrieb (mit Wirkstrom) vorliegt.
Schließlich wird auch durch den Funktionsablauf überprüft, ob ein Handeinstellbetrieb vorgesehen ist oder nicht.
Der Funktionsblock 327 ist für eine laufende Selbsteinstellung für den optimalen Zündzeitpunkt zum Erreichen der optimalen Phasenanschnittwinkel im Einschaltmoment vorgesehen. Dabei werden die Wirkströme und auch die Blindströme gemessen. Wenn keine Wirkströme in den Phasen auftreten herrscht Leerlaufbetrieb. Im Leerlaufbetrieb wird polaritätsabhängig geprüft, ob die Blindströme um 10 % größer als die Ruheströme sind. Im Lastbetrieb wird polaritätsabhängig geprüft, ob die Blindströme um 10 % größer als die Wirkströme sind. Werden jeweils Überschreitungen beim Vergleichen registriert, so wird ein Steuersignal zum Verkleinern der Abweichung abgegeben. Die laufende Selbsteinstellung ist insbesondere beim Pulsgruppenbetrieb mit variabler Scheinlast vorgesehen. Es wird dabei der Blindstrom laufend gemessen und beim Überschreiten eines vorgegebenen Wertes, insbesondere des momentanen Wirkstromwertes, wird der Stromflußwinkel der jeweils ersten eingeschalteten Spannungshalbwelle bei zu deren Polarität gleicher Polarität des Blindstromimpulses verkleinert und bei gegensätzlicher Polarität der Stromflußwinkel vergrößert.
Erwähnt sei noch, daß die Funktionsblöcke 326 und 327 Mikrocontroller für die vorbeschriebenen Funktionen enthalten.

Die Zündlogik 308a hat die Aufgabe, entsprechend der vorgesehenen Schaltgruppe Zündsignale weiterzugeben oder zu sperren. Wie in Fig. 6 erkennbar, weist dieser Funktionsblock Zündsignaleingänge 340 und 341 auf, die mit der Phasenanschnittsteuerung 303a (Fig. 3) verbunden sind. Die Ausgänge 342 bis 344 sind die Zündsignalausgänge , die an die Zündelektroden der Wechselstromschalter 302a, 302b und 302c geführt sind (vgl. Fig. 2 und 3).

An den übrigen Anschlüssen des Funktionsblöckes 308 stehen Eingangssignale für die Funktionsbedingungen an.

Der Funktionsblock 303a bildet insgesamt die Phasenanschnittsteuerung und dient zur Erzeugung der Zündsignale. Dies erfolgt in Abhängigkeit von Hand- einstellparametern oder aber in Abhängigkeit von Selbsteinstellparametern. Außerdem beinhaltet dieser Funktionsblock noch eine Überstromverriegelung. Eine mögliche Schaltung der Phasenanschnittsteuerung 303a ist in Fig. 5 wiedergegeben.
Zu der Phasenanschnittsteuerung 303a gehört noch ein Netzsynchronisationsblock 345 (Fig. 3). Mit 346 ist ein Netzteil bezeichnet.

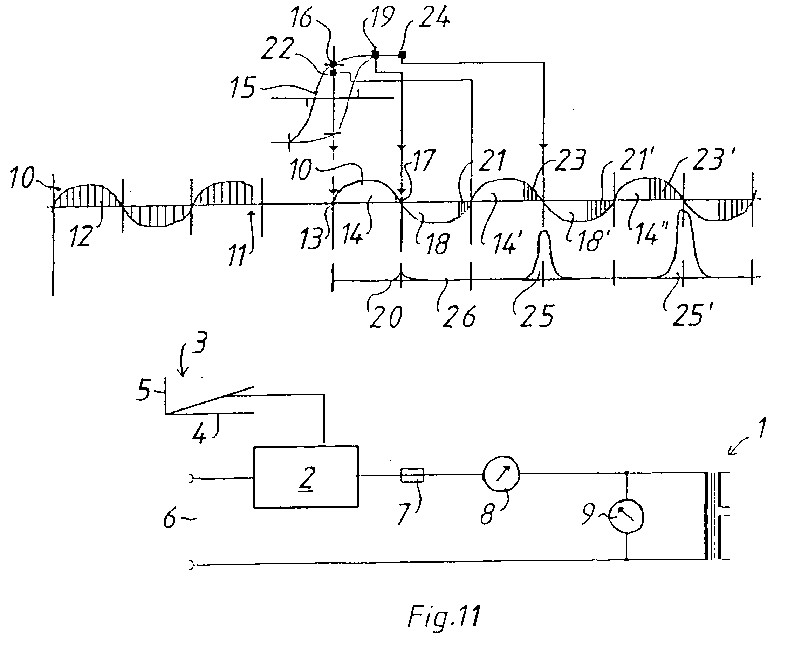

Die Fig. 11 zeigt Verläufe der Netzspannung 10 und des primärseitigen Stromes 26 beim Einschalten eines Transformators 1 mit einem Dimmer 2. Der Transformator 1 stellt ein mögliches induktivitätsbehaftetes Stromversorgungsgerät dar, welches zum Beispiel auch durch eine induktive Last gebildet werden kann.

Der Dimmer 2 weist eine durch das Diagramm 3 dargestellte Rampenschaltung auf, durch die in der Zeit 4 die Spannung 5 von einem Wert 0 auf einen vorbestimmten Sollwert erhöht wird. Solche bekannten Dimmerschaltungen sind im Zusammenhang mit Transformatoren 1 insbesondere bei Niedervolt-Halogenbeleuchtungseinrichtungen im Einsatz, bei denen eine Netzspannung 6 von zum Beispiel 220 Volt über den Transformator 1 auf sekundärseitig zum Beispiel 24 Volt transformiert wird.

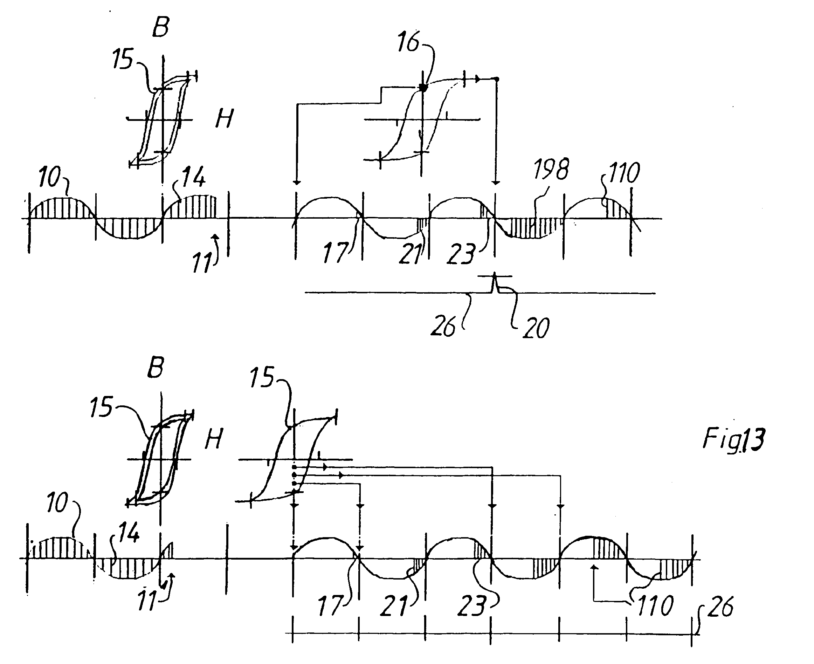

Der Dimmer 2 ist üblicherweise zum Beispiel mit einer trägen 1,6 Ampere-Sicherung 7 und dem Transformator 1 in Reihe geschaltet, wobei zur Messung der in den Fig. 11 und 13 dargestellten Meßkurven ein Strommeßgerät 8 in Reihe eingebunden ist und ein Spannungsmeßgerät 9 die Netzwechselspannung bzw. die primärseitige Transformatorspannung erfaßt.

Die sinusförmige Kurve zeigt die Netzwechselspannung 10, die zu einem beliebigen Zeitpunkt 11 ausgeschaltet wird, der insbesondere auch nicht mit dem Ende einer Halbwelle zusammenfallen kann. In der Fig. 11 bedeutet die Schraffur zwischen Abszisse und der Kurve 10, daß die Netzspannung von dem Spannungsnetzgerät 9 erfaßt wird und somit an der primärseitigen Wicklung des Transformators 1 anliegt.
Nach dem zufälligen Zeitpunkt 11 des Ausschaltens der Netzspannung wird der Transformator 1 vor dem Ende der positiven Halbwelle 14 der Netzspannung eingeschaltet, welche zu einem Zeitpunkt 13 beginnt.

Die Hysteresekurve 15 des Transformators 1, d. h. das Induktions-Feldstärke-Diagramm, weist einen Punkt 16 auf, der die von dem Ausschalten 11 herrührende Remanenz anzeigt. In dem in Fig. 11 dargestellten Fall weist der Transformator 1 eine positive Remanenz 16 auf. Die Rampenschaltung im Dimmer 2 schaltet in der eingeschalteten Halbwelle 14 einen kleinen Abschnittwinkel 17 auf den Transformator 1 durch. Der Abschnittwinkel 17 ist vor dem Übergang der positiven Halbwelle 14 in die negative Halbwelle 18 angeordnet. Dadurch wird die Remanenz 16 des Transformators 1 weiter in die positive Sättigung 19 verschoben, so daß ein kleiner Einschaltspitzenstrom 20 auftritt. Durch den in der negativen Halbwelle 18 auftretenden und gegenüber dem Abschnittwinkel 17 etwas größeren Abschnittwinkel 21 wird die Remanenz an den Punkt 22 der Hysteresekurve 15 zurückverschoben. Der im Winkelwert in der nächsten positiven Halbwelle 14′ weiter ansteigende und damit in seiner Summe unsymmetrische Abschnittwinkel 23 treibt den Transformator 1 in der nächsten positiven Halbwelle 14′ in die Sättigung der Remanenz 24, so daß ein großer Inrush oder Einschaltspitzenstrom 25 auftritt. Nach zwei weiteren Halbwellen 18′ und 14˝ ist wiederum ein Überschuß an positivem Phasenabschnittwinkel aus der Summe der Winkel 21′ und 23′ vorhanden, so daß ein noch größerer Inrush 25′ auftritt, der die Sicherung 7 des Transformators zerstört. Dieses Ansprechen der Sicherung tritt bei einem Transformator 1 mit oder ohne angeschaltete Last auf.

Die Fig. 12 zeigt eine Schaltung zur Vermeidung von Einschaltspitzen 25 beim Einschalten eines Stromversorgungsgerätes mit einem festen, vorgegebenen Anschnittwinkel, zum Beispiel beim Aufdimmen eines Niedervolt-Halogen-Beleuchtungssystems, gemäß einem Ausführungsbeispiel der Erfindung. Die Netzspannung 6 speist ein Netzteil 31, welches die positive Betriebsspannung 32 und die negative Betriebsspannung 33 für die in der Fig. 12 dargestellte Schaltung bereitstellt. Ein Steckkontakt 27 ist mit Schaltungsmasse 34 verbunden, während der andere Steckkontakt 28 über einen Netzschalter 35 an die Primärwicklung 36 des Transformators 1 führt, an der sekundärseitig eine Last 37 angeschaltet ist.

Der zweite primärseitige Steckkontakt des Transformators 1 ist über einen Wechselstromschalter 38 in Gestalt eines Triacs, an dessen Stelle auch zwei Thyristoren eingesetzt werden können, und ein Meßshunt 39, der zum Beispiel einen Wert von 0,1 Ohm aufweist, an Schaltungsmasse 34 gelegt. Die vom Netzteil 31 erzeugte positive Versorgungsspannung 32 lädt über den Widerstand 40 einen Kondensator 41 gegen die Schaltungsmasse 34 auf.

Somit liegt für die Aufladezeit des Kondensators 41 ein Pegel Null-Signal auf der Leitung 42 an, welches durch einen Inverter 43 in ein Netz-Ein-Signal 44 umgewandelt wird. Das Netz-Ein-Signal 44 liegt an einem Setzeingang 45 eines Verzögerungsgliedes 46 an, dessen invertierender Ausgang 47 einen Sollwertschalter 48 beaufschlagt. Das Verzögerungsglied 46 ist zum Beispiel auf eine Verzögerungszeit von 2 Sekunden voreingestellt, so daß während der ersten zwei Sekunden nach dem Einschalten der Netzspannung der Dimm-Sollwertschalter 48 offenbleibt. Gleichzeitig beaufschlagt das Netz-Ein-Signal 44 den Rücksetzeingang 49 eines weiteren Verzögerungsgliedes 50.

Das Netz-Ein-Signal 44 wird durch einen Inverter 52 invertiert, so daß ein Pegel-Null-Signal für die ersten Zehntel Sekunden nach dem Netzeinschalten über eine Leitung 53 an einem Eingang eines UND-Gatters 54 anliegt. Somit ist der Triac 38, welcher mit dem Ausgang des UND-Gatters 54 über eine Steuerleitung 55 verbunden ist, in den ersten Zehntel Sekunden nach dem Einschalten des Netzteiles nicht zündbar.

Das Netz-Ein-Signal 44 beaufschlagt weiterhin einen Setzschalter 61, der mit seinem einen Schaltkontakt mit der positiven Versorgungsspannung 32 verbunden ist. Der andere Kontakt ist über einen Ladewiderstand 62 und einem Kondensator 63 mit Schaltungsmasse 34 verbunden. Der sich für eine Zeit von zum Beispiel 0,1 Sekunde Netz-Ein-Signal schließende Setzschalter 61 lädt über den Ladewiderstand 62 den Kondensator 63 auf, der sich danach wieder über den Entladewiderstand 64 entlädt. Die Zeitkonstante des RC-Gliedes 63, 64 beträgt zum Beispiel ca. zwei Sekunden. Somit liegt kurz nach dem Einschalten des Netzteiles 31 eine positive Spannung an einem Analogkomparator 65 über die Leitung 66 an.

Der andere Eingang des Analogkomparators 65 ist mit dem Ausgang eines Sägezahngenerators 67 verbunden, der über zwei Netznulldurchgangserkennungsschaltkreise 68 und 69 gestartet wird.

Der positive Netznulldurchgangserkennungsschaltkreis 68 liefert einen Nadelimpuls 71 bei positiven Nulldurchgängen der Netzspannung und der negativen Netznulldurchgangserkennungsschaltkreis 69 erzeugt Nadelimpulse 72 bei negativen Durchgängen der Netzwechselspannung 10. Die Nadelimpulse 71 und 72 liegen an einem ODER-Gatter 73 an, so daß auf der Leitung 74 Nadelimpulse bei jedem Nulldurchgang der Netzwechselspannung 10 an dem Steuereingang des Sägezahngenerators 67 auftreten.

Der zeitliche Verlauf der Netzwechselspannung 10 ist auf der Abszisse 80 über mehrere Perioden aufgetragen. Die Nadelimpulse 71 und 72 liegen um die Nulldurchgänge der Netzwechselspannung 10. Das Ausgangssignal 81 des Sägezahngenerators weist eine positive Steigung auf, die vom Spannungswert 0 Volt beim Start der Rampe bis zu einer vorgegebenen Maximalspannung 82 verläuft, bei welcher sie durch den nächsten Nulldurchgang der Netzwechselspannung 10 wieder zurückgesetzt wird. Das auf der Leitung 66 anliegenden Kondensatorspannungssignal fällt über mehrere Perioden leicht ab, wobei es in der Spannung ca. ein Drittel des Anfangswertes nach ungefähr zwei Sekunden oder hundert Netzwechselspannungsperioden erreicht.

Im Analogkomparator 65 wird die Spannung des Kondensators 63 mit der jeweiligen Spannung der Rampe 81 des Sägezahngenerators 67 verglichen und, falls die Spannung des Sägezahngenerators 67 größer ist, ein Pegel Eins-Signal 83 ausgegeben, welches mit dem invertierten Netz-Ein-Signal auf der Leitung 53 im UND-Gatter 54 nach der Einschaltverzögerung zu einem Zündsignal auf der Leitung 55 für den Triac 38 führt, so daß ein stetig wachsender Anschnitt 84, 85 und 86 vor jedem Nulldurchgang der Netzwechselspannung entsteht. Nachdem die Spannung 10 im Nulldurchgang der Netzwechselspannung auf 0 abgefallen ist, sperrt der Triac 38 bis zum nächsten Zündsignal.

Dadurch daß sich der Kondensator 63 über den Entladwiderstand 64 entlädt, sinkt die Spannung in einem zeitlichen Verlauf ab und der Anschnittwinkel 84, 85 und 86 vergrößert sich. Dadurch ergibt sich nach einer ungeraden Anzahl von Nulldurchgängen, d. h. nach einem Anschnitt 84, 86 oder im zeitlichen Abstand jeweils einer weitere Vollwelle ein kleiner Inrush oder Einschaltspitzenstrom 20 gemäß Fig. 11 bzw. 107 gemäß Fig. 12, der durch eine Spannungsmessung über dem Meßshunt 39 in dem positiven Stromwandler 87 bzw. in dem negativen Stromwandler 88 erkennbar ist.

Die Ausgänge der Stromwandler 87 und 88 sind über jeweils einen Widerstand 89 an einen virtuellen Nullpunkt 90 angeschlossen, der über einen Offset-Widerstand 91 an die negative Betriebsspannung 33 angeschlossen ist. Dadurch erhält ein an den virtuellen Nullpunkt 90 angeschlossener Analogkomparator 92 nur dann ein positves Signal, wenn der positive Stromwandler bzw. der negative Stromwandler ein genügend großes Signal abgeben. Dies hängt von dem Widerstand 91 ab. Vorzugsweise überschreitet das den Analogkomparator 92 beaufschlagende Signal den Pegel 0 bei dem 1,5-fachen des Nennstromes 26 im Primärkreis des Transformators 1.

Dieser Fall ist durch den in der Fig. 12 dargestellten kleinen Einschaltspitzenstrom 107 gegeben, so daß in diesem Falle ein Pegel Eins-Signal 93 an das Verzögerungsglied 50 weitergeleitet wird daß nach dem zwischenzeitlichen Aufladen des Kondensators 41 und dem resultierenden Pegel Null-Signal am Eingang 49 setzbar ist. Daraufhin versetzt das Verzögerungsglied 50 den Setzschalter 96 in einen leitenden Zustand für ca. eine Zehntel Sekunde, so daß das Zeitglied läuft. Der Remanenz-Setzschalter 96 ist mit seinem einen Kontakt an ein Potentiometer 97′, 98 angeschlossen, das zwischen der positiven Betriebsspannung 32 und der Schaltungsmasse 34 angeordnet ist. Dieses niederohmige Potentiometer 97′, dessen Ausgangsspannungswert fest voreinstellbar ist, setzt die Spannung des Kondensators 63, der an dem anderen Kontakt des RemanenzSetzschalters 96 angeschlossen ist, auf eine vorbestimmte Spannung, die im Spannungsverlauf des Kondensators 63 durch den Kurvenabschnitt 97 gekennzeichnet ist. Für dieses Entladen des Kondensators ist üblicherweise eine Verzögerungszeit von 0,001 Sekunden ausreichend.

Bei der nächsten Rampe 81′ des Sägezahngenerators 67 wird somit ein großer Anschnittwinkel 198 erzeugt, der in der in Fig. 12 gezeigten Darstellung ca. 135 ° umfaßt. Der Anschnittwinkel 198 liegt immer im Winkelbereich zwischen 90 ° und 180 °, wobei der letztere Wert einer vollen negativen Halbwelle entspricht. Durch diesen durch den Spannungswert des Potentiometers 97′, 98 voherbestimmten Anschnittwinkel wird die Remanenz des Transformators 1 in der Hysteresekurve 15 definiert gesetzt, so daß im Anschluß daran der Sollwertschalter 48 zum Dimmbetrieb geöffnet werden kann. Das kann sofort geschehen, wird aber vorteilhafterweise nach dem Ablauf des Verzögerungsgliedes 50 nach 0,1 Sekunden getan.

Der Sollwertschalter 48 ist über einen Widerstand 98˝ in Reihe mit dem Kondensator 63 verbunden und umfaßt ein vom Bediener einstellbares Potentiometer 99, mit dessen Hilfe die Spannung des Kondensators 63 zwischen der positiven Versorgungsspannung 32 und der Schaltungsmassse 34 einstellbar ist, so daß sich ein vom Bediener festgelegter Plateaubereich 100 in der Spannung des Kondensators 63 ergibt, so daß in der folgenden Halbwelle immer der gleiche vorbestimmte und symmetrische Anschnittwinkel 110 verwendet wird, der zu dem gewünschten gedimmten Zustand des Transformators 1 und der an diesem angeschlossenen Last führt. Durch die Verwendung des Widerstandes 98˝ kann sich der neue Dimmsollwert langsam einstellen und dabei keinen neuen Inrush bilden.

In der Fig. 12 ist zur besseren Darstellung der die Remanenz setzenden Vorgänge eine Hysteresekurve 15 dargestellt, in die die Remanenzpunkte 105, 106, 107 und 108 eingezeichnet sind, die der Remanenz des Transformators 1 zu entsprechenden Nulldurchgängen 105, 106, 107 und 108 der Netzwechselspannung 6 zugeordnet sind. Ausgehend von einer positiven Remanenz 105 im ersten Anschnitt 84 wird die Remanenz durch den entgegengesetzt gerichteten Anschnitt 85 zum Hysteresepunkt verschoben, um dann durch den positiven, den negativen Anschnittwinkel überwiegenden Winkel 86 in die Sättigung 107 verschoben zu werden, wodurch sich ein kleiner, die Schaltung nicht gefährdender Einschaltspitzenstrom ergibt. Der Einschaltsspitzenstrom erzeugt durch die Komparatorschaltung 92 einen vorbestimmten Anschnittwinkel 198, der die Remanenz in einen definierten vorbestimmten Punkt 108 setzt, so daß anschließend der durch das Drehknopf-Potentiometer 99 vorbestimmte Dimmzustand 100 einstellbar ist.

Diese an einem Einphasennetztransformator vorgestellte Schaltung kann auf ein mehrphasiges induktionsbehaftetes Stromversorgungsgerät erweitert werden, wobei in den weiteren Zweigen S, R und T jeweils in den durchgehenden Leitungen weitere Wechselstromschalter 38 vorgesehen sind, die vorzugsweise über Potentialtrennen der Optokoppler angesteuert werden.

Die Fig. 13 zeigt Signalverläufe beim Einschalten des Transformators 1 mit einem Dimmer 2. Die Netzspannung 10 ist zu einem Zeitpunkt 11 abgeschaltet worden, als sie sich in einer positiven Halbwelle 14 befand. Damit ist die Remanenz 16 positiv gesetzt und durch die Anschnitte 17, 21 und 23 in die Sättigung verschoben, so daß die in der Fig. 12 dargestellte Schaltung auf den kleinen Einschaltspitzenstrom 20 reagiert und einen einmaligen großen negativen Anschnittwinkel 198 erzeugt, um die Remanenz definiert zu setzen, da der Strom das 1,5-fache des Nennstromes überschritten hat. Anstelle dieses durch den Komparator 89, 91 und 92 voreingestellte Schwelle des 1,5-fachen des Nennstromes kann zum Beispiel auch das 5fache des Nennstromes als Auslöseschwelle verwendet werden.

Beim Ausschalten der Netzspannung zu einem Zeitpunkt 11′ zu Beginn einer positiven Halbwelle 14′ weist die Remanenz dagegen einen negativen Wert auf, der sich durch die Anschnitte 17, 21 und 23 symmetriert, so daß der Sollanschnittwinkel 110 ohne das Auftreten eines Einschaltspitzenstromes 25 beim primärseitigen Strom 26 erreicht wird.

Die bipolaren und größerwerdenden Abschnitte weisen bis zur Erreichen der symmetrischen Soll-Anschnittwinkel 110 eine Asymmetrie auf. Wenn die Polarität des ersten Anschnittes der Remanenzpolarität entgegengesetzt ist, erfaßt der Komparator 92 keine Ströme, die über den Nennstrom 26 der Schaltung der Fig. 12 hinausgehen, so daß der Soll-Anschnittwinkel 110 nach einer gewissen Anzahl von im Winkelwert aufsteigenden, gleichgepolten Anschnitten erreicht wird. Nach dem Ablauf der Verzögerungszeit des Verzögerungsgliedes 46 wird der Sollwertschalter 48 eingeschaltet.
Ist jedoch die Polarität der durch den Zeitpunkt des Ausschaltens 11 gegebenen Remanenz und des ersten Anschnittes 17 gleich, so intergrieren sich die Einschaltströme auf, so daß nach einer durch die Eigenschaften des Transformators 1 gegebenen Anzahl von Anschnitten der Primärkreisstrom 26 über den vorbestimmten Wert des Nennstromes hinausgeht und dieser Einschaltspitzenstrom 25 von zum Beispiel des 1,5-fachen des Nennstromes 26 zu einem einmaligen, Remanenz setzenden Anschnitt mit einem großen Winkel 198 führt. Dieser Anschnittwinkel 198 ist größer als 90 ° und kann auch die ganze Halbwelle, also 180 ° umfassen. Dieser durch das Potentiometer 97′ und 98 voreingestellte Anschnittwinkel 198 ist für den verwendeten Transformator 1 typisch.

Natürlich kann die Schaltung der Fig. 12 auch in einer entsprechend anders gepolten Weise aufgebaut werden, so daß der erste Anschnittwinkel 17 vor einem positiven Nulldurchgang einer negativen Halbwelle auftritt und ein dementsprechend anders gepolter Einschaltspitzenstrom 25 zum Ansprechen des Komparators zur Erzeugung der Remanenz setzenden Halbwelle führt. Diese Halbwelle mit dem Anschnittwinkel 198 ist dann entsprechend in einer positiven Halbwelle 14 angeschaltet.

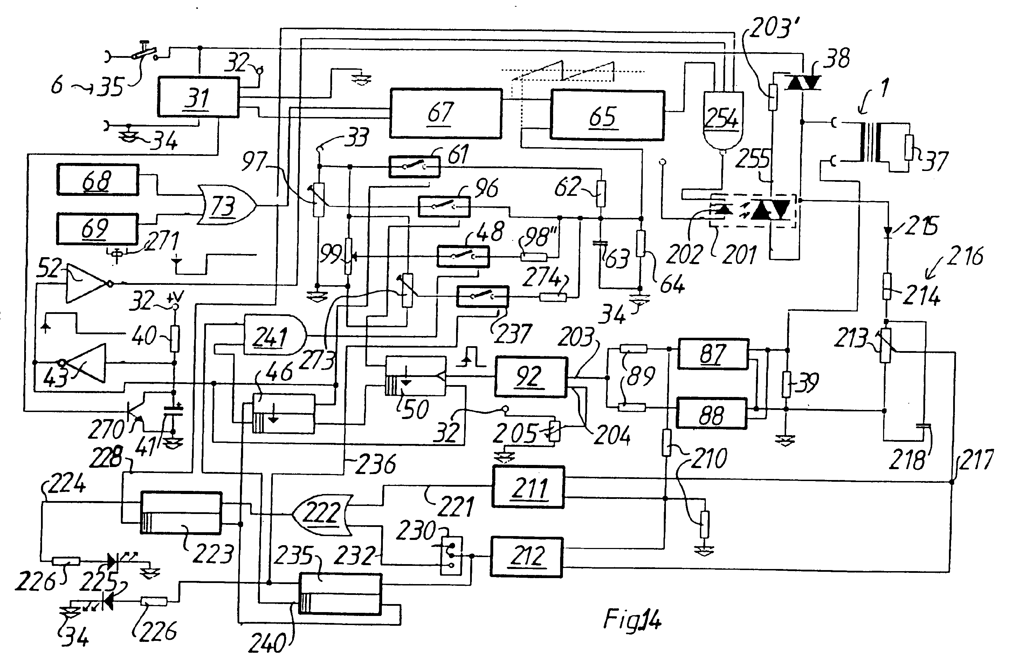

Die Fig. 14 zeigt ein Blockschaltbild einer Vorrichtung zur Wechselstrom-Einschaltbegrenzung gemäß einem weiteren Ausführungsbeispiel, das eine Unterstrom- und Überstromschutzschaltung umfaßt. Gleiche Merkmale sind mit gleichen Bezugszeichen gekennzeichnet. Im folgenden wird auf die Unterschiede zu der in der Fig. 12 dargestellten Vorrichtung eingegangen.

Das Netzteil 31 stellt die positive Betriebsspannung 32 gegenüber Masse 34 zur Stromversorgung der in der Schaltung eingesetzten elektronischen Komponenten bereit und beaufschlagt den Sägezahngenerator 67 mit der negativen Betriebsspannung 33. Ein schnelles Netz-Aussignal beaufschlagt den Transistor 270, der den Kondensator 41 schnell entlädt, damit immer ein neues Netz-Einsignal erzeugt werden kann, auch wenn kurz hintereinander aus- und eingeschaltet wird. Der negative Netznulldurchgangserkennungsschaltkreis 69 weist einen Symmetrierschaltkreis 271 zum Nullabgleich auf.

Das UND-Gatter 54 ist durch ein invertierendes UND-Gatter 254 ersetzt, das den Triac 38 über einen Optokoppler 201 ansteuert, der eine gegen die positive Versorgungsspannung 32 geschaltete LED 202 aufweist. Die Steuerelektrode 255 des Triac 38 ist über einen Widerstand 203′ mit dem Optokoppler 201 verbunden, dessen anderer Steckkontakt elektrisch an den Transformator 1 angeschlossen ist.

Der analoge Komparator 92 verfügt über zwei Eingänge 203 und 204. Der Eingang 203 wird wie in der Schaltung gemäß der Fig. 12 von den Ausgangssignalen der Stromwandler 87 und 88 beaufschlagt, während der Eingang 204 mit einem voreinstellbaren Potentiometer 205 verbunden ist, mit dem eine Spannung zwischen der positiven Betriebsspannung 32 und Schaltungsmasse 34 abgreifbar ist. Durch das Potentiometer 205 wird die Spannungsschwelle eingestellt, ab der der Analogkomparator 92 ein durch die Stromwandler 87 bzw. 88 erzeugtes Spannungssignal als zu hoch und damit als Überstromsignal ausgibt. Die mit dem Potentiometer eingestellte Schwellspannung entspricht zum Beispiel einem 1,5-fachen bis 7-fachen des Nennstromes.

Der Ausgang des positiven Stromwandlers 87 ist über einen Spannungsteiler 210 mit Eingängen von Über/Unterstromkomparatoren 211 und 212 verbunden, deren zweite Eingänge über ein Potentiometer 213 parallel zu dem Meßshunt 39 und der Primärwicklung des Transformators 1 angeordnet sind. In Reihe mit dem Potentiometer 213 ist ein Widerstand 214 und eine Diode 215 geschaltet. Eine Kapazität 218 ist parallel zu dem Potentiometer 213 angeordnet. Diese Sollstromerkennungsschaltung 216 verfügt an ihrem zu den Komparatoren 211 und 212 führenden Ausgang 217 über ein Sollstromsignal, das in den Komparatoren 211, 212 mit dem über den Spannungsteiler 210 angepaßten Ist-Stromsignal verglichen wird. Damit funktioniert die Über- bzw. Unterstromerkennung auch bei angeschnittenen Halbwellen.

Der Überstromkomparator 211 gibt beim Auftritt eines Überstromes ein Lastfehlersignal 221 aus, das ein ODER-Gatter 222 und über dies den Setzeingang eines Flip-Flops 223 beaufschlagt, Das Flip-Flop 223 gibt über seinen Ausgang 224 ein Überstromlastfehlersignal aus, das zum Beispiel über eine Leuchtdioden-Widerstandskombination 225, 226 gegenüber Masse 34 anzeigbar ist.

Der Analogkomparator für Unterstrom 212 erkennt ein Unterstromsignal, das zum Beispiel dann vorliegen kann, wenn Lampenverbindungen eines Niedervoltbeleuchtungssystems die stromführenden Drähte schlecht kontaktieren. Der dann entstehende zusätzliche Widerstand senkt den Ist-Strom ab. Die Ge fährlichkeit eines solchen Unterstromes liegt in der Brandgefahr an den sich aufheizenden schlecht kontaktierenden Verbindungsstellen.

Das bei einem Über- bzw. Unterstrom an dem invertierenden Ausgang 228 des Flip-Flops 223 anliegende Signal beaufschlagt das den Triac 38 schaltende invertierenden UND-Gatter 254, so daß bei einem Lastfehler sowohl bei Überstrom als auch bei Unterstrom der Dimmer abgeschaltet wird.

Der bei einer bevorzugten Ausgestaltung eingesetzte Schalter 230 gestattet beim Auftreten eines Unterstromes eine bestimmte Wahl zwischen einem automatischen Abdimmen und dem oben beschriebenen Ausschalten. Ist der Schalter, entgegen der Darstellung in der Fig. 14 auf die Leitung 232 geschaltet, die das ODER-Glied 222 beaufschlagt, so wird ein Unterstrom-Lastfehlersignal 228 den Dimmer abschalten. In dem in der Fig. 14 dargestellten Fall beaufschlagt das Ausgangssignal des Analogkomparators für Unterstrom 212 ein Unterstromerkennungs-Flip-Flop 235, dessen Ausgang mit einer weiteren Widerstands-Leuchtdiodenkombination 225, 226 einen Unterstrom optisch anzeigt und weiterhin durch das Pegel-Eins-Signal auf der Leitung 236 den Teillastschalter 237 schließt, durch den ein voreingestelltes Potentiometer 273 den Dimmer auf einen kleineren Helligkeitswert herunterregelt, in dem die Spannung des Kondensators 63 auf einem großen Spannungswert festgehalten wird. In Reihe mit dem Schalter 237 ist ein Widerstand 274 von zum Beispiel 100 Kiloohm angeordnet, damit die Änderung des Anschnittes langsam vollzogen wird.
Dann ist das vom Analogkomparator 65 erzeugte Pegel Eins-Signal vor dem Nulldurchgang der Halbwellen der Netzspannung kurz und damit der regelmäßige Anschnittwinkel, der die Stromflußdauer und damit die Helligkeit zum Beispiel einer Halogenleuchte bestimmt. Damit ist es möglich, zum Beispiel bei Gewerberäumen, trotz einem Unterlastfehler eine ungefährliche Notbeleuchtung durch einen kleinen Anschnittwinkel aufrechtzuerhalten.
Gleichzeitig ist der invertierende Ausgang 240 des Unterstromerkennungs-Flip-Flops 235 mit einem UND-Gatter 241 verbunden, das hinter dem Ausgang 47 des Monoflops 46 angeordnet ist, so daß der Sollwertschalter 48 offengehalten wird, also im Falle eines Unterstromes sperrend ist, damit dann vom Potentiometer 273 der Teil-Anschnitt bestimmt wird. Die Reseteingänge der Flip-Flops 223 und 235 sind mit dem Ausgang des Monoflops 46 verbunden, so daß sie durch das am Eingang 45 des Monoflops 46 anliegende Netzeinsignal zurückgesetzt werden.

Der Meßshunt 39 kann zum Beispiel einen Widerstandswert von 0,1 Ohm aufweisen. Der in Reihe mit dem Sollwertschalter 48 vorgesehene Widerstand kann einen Wert von zum Beispiel 220 Kiloohm und das vom Bediener einstellbare Potentiometer 99 einen maximal einstellbaren Widerstandswert von 20 Kiloohm. Das Anschnittwinkeleinstellpotentiometer 97 weist ebenfalls einen maximalen Widerstandswert von 20 Kiloohm auf. Der Ladewiderstand 62 verfügt über einen Widerstand von 10 Kiloohm und der Entladewiderstand 64 über einen Widerstandswert von 1 Megaohm.

Fig. 15 zeigt ein weiteres Ausführungsbeispiel der Erfindung, wobei die hier gezeigte Schaltung zum Remanenzsetzen mit unipolar angeschnittenen Halbwellen arbeitet.
Auch diese Schaltung kann beim Aufdimmen eines Niedervolt-Halogen-Beleuchtungssystems oder zum Einschalten zum Beispiel eines Schweißtransformators eingesetzt werden.

Die Netzspannung 6 speist ein vorteilhafterweise eisenloses Netzteil 31, welches die positive Betriebsspannung 32 für die in Fig. 15 dargestellte Schaltung bereitstellt. Ein Steckkontakt 27 ist mit Schaltungsmasse 34 verbunden, während der andere Steckkontakt 28 zum einen über einen Netzschalter 35 an das Netzteil 31 und zum anderen an die Primärwicklung 36 des Transformators 1 führt, an den sekundärseitig eine Last 37 angeschaltet ist.
Der zweite primärseitige Steckkontakt des Transformators 1 ist über einen Wechselstromschalter 38 in Gestalt eines Triacs, an dessen Stelle auch zwei Thyristoren eingesetzt werden können, und einen Meßshunt 39, der zum Beispiel einen Wert von 0,01 bis 0,1 Ohm aufweist, an Schaltungsmasse 34 gelegt.
Das Netzteil 31 erzeugt ein schnelles und dynamisches Netz-Ein-Erkennungssignal, welches an der Basis eines Transistors 40′ anliegt, der einen zum Emitter und Kollektor parallel geschalteten Kondensator 41 zwischen positiver Betriebsspannung 32 und Schaltungsmasse 34 schnell entlädt. Das Netz-Ein-Erkennungssignal, welches gewährleistet, daß der Wechselstromschalter erst eingeschaltet wird, wenn alle Schaltungskomponenten eine gesicherte Stromversorgung aufweisen, ist ebenfalls ein Pegel-Eins-Signal, wenn die Spannungsvergleichseinrichtung des Netzteiles 31 eine Versorgungsunterspannung erkennt.
Die vom Netzteil 31 erzeugte positive Versorgungsspannung 32 lädt den Kondensator 41 über den Widerstand 40, zum Beispiel in 200 Millisekunden, gegen die Schaltungsmasse 34 auf. Somit liegt für die Aufladezeit des Kondensators 41 ein Pegel NullSignal auf der Leitung 42 an. Das Pegel Null-Signal wird durch einen Inverter 43 in ein Netz-Ein-Signal 44 umgewandelt. Das Netz-Ein-Signal 44 liegt über einen Inverter 52 an einem Freigabe- und Sperreingang 145 einer Anschnittsteuerschaltung 146 an.
Die Anschnittsteuerschaltung 146 kann zum Beispiel durch den integrierten Schaltkreis TCA 785 der Firma Siemens realisiert sein. Die Anschnittsteuerschaltung 146 ist über die Leitung 147 mit der Schaltungsmasse 34 und über die Leitung 147′ mit der positiven Betriebsspannung 32 verbunden. Der Steckkontakt 28 ist über den Hauptschalter 35 und einen RC-Schaltkreis 148 mit dem Synchronisationseingang 169 der Anschnittsteuerschaltung 146 verbunden.
Der RC-Schaltkreis 148, der insbesondere aus einer Parallelschaltung von einem Widerstand 148′ und einem Kondensator 148˝ aufgebaut ist, simuliert eine einige Winkelgerade vorauseilende Netzspannung an einem Synchronisationseingang 169 der Anschnittsteuerung 146, damit die Thyristorfreiwerdezeit am Ende jeder Netzhalbwelle kompensiert wird und deshalb das Zündsignal etwas vor der eigentlichen Netzhalbwelle endet.

In der Anschnittsteuerschaltung 146 ist ein Rampengenerator vorgesehen. Die maximale Spannung und das Abfallverhalten der zum Beispiel in Sägezahnform vorliegenden Signalrampen ist mit dem Rampenwiderstand 149 und dem Rampenkondensator 149′ einstellbar.

In der Anschnittsteuerschaltung 146 ist desweiteren ein Komparator vorgesehen, in dem kontinuierlich das Rampenspannungssignal mit einem auf der Steuerleitung 150 anliegenden Spannungssteuersignal verglichen wird.
Dieser Vergleich findet dann statt, wenn am Freigabe- bzw. Sperreingang 145 ein Pegel-Eins-Signal anliegt. Sobald das die Anschnittsteuerschaltung 146 auf der Steuerleitung 150 beaufschlagende externe Spannungssignal kleiner als die monoton wachsende Rampen- bzw. Sägezahnspannung wird, wird in einer positiven Halbwelle 114 der Netzwechselspannung 10 ein Schaltimpuls auf der positiven Schaltleitung 153 und in einer negativen Halbwelle 118 der Netzwechselspannung 10 ein Schaltimpuls auf der negativen Schaltleitung 154 ausgegeben. Die Impulsdauer wird durch die Beschaltung der Impulsdauerlängensteuerleitung 155 mit Schaltungsmasse 34 derart definiert, daß die Impulslänge immer bis zum Nulldurchgang der gerade anliegenden Halbwelle 114 oder 118 verlängert wird. Da mit Schaltimpulsen auf den Leitungen 153 und 154 der Triac 38 gezündet wird und verhindert werden muß, daß ein noch im Nulldurchgang der Netzwechselspannung 10 vorliegender Impuls auf den Leitung 153 bzw. 154 den Triac zünden kann, ist der eine vorauseilende Netzspannung 10 simulierende RC-Schaltkreis 148 vor dem Synchronisationseingang der Anschnittsteuerschaltung angeordnet worden. Somit endet der auf den Leitungen 153 bzw. 154 anliegende Impuls sicher einige Grade vor dem jeweiligen Nulldurchgang der Netzwechselspannung 10.

Die negative Schaltleitung 154 der Anschnittsteuerschaltung 146 ist mit einem Eingang eines ODER-Gatters 56 verbunden, dessen Ausgang über einen Widerstand 157 und/oder zum Beispiel einen Optokoppler an die Steuer- und Zündelektrode 158 des Triacs 38 angeschlossen ist.

Das oben beschriebene Netz-Ein-Signal 44 beaufschlagt weiterhin einen Setzschalter 61, der mit seinem einen Schaltkontakt mit der positiven Versorgungsspannung 32 verbunden ist. Der andere Kontakt ist über einen Ladewiderstand 162 und einen Kondensator 163 mit Schaltungsmasse 34 verbunden. Der sich für eine Zeitdauer von zum Beispiel 0,1 Sekunden NetzEin-Signal schließende Setzschalter 61 lädt über den Ladewiderstand 62 den Kondensator 63 auf, der sich danach wieder über den Entladewiderstand 64 entlädt. Die Zeitkonstante des RC-Gliedes 63, 64 beträgt zum Beispiel ca. 0,5 Sekunden. Somit liegt kurz nach dem Einschalten des Netzteiles 31 über die Leitung 166 eine positive Spannung auf der Steuerleitung 150 an, deren Signal in der Anschnittsteuerschaltung 146 mit dem Rampenspannungssignal verglichen wird.

Damit wird nach der Freigabe 145 der Anschnittsteuerschaltung 146 der Triac 38 mit seinem Winkel immer größerwerdenden negativen Anschnitten gezündet, so daß das induktivitätsbehaftete Stromversorgungsgerät 1 langsam mit den unsymmetrischen, nur negativen Anschnitten in die Sättigung getrieben wird. Die Anschnitte könnten auch einen konstanten Winkelwert aufweisen. Dieser einfachere Schaltungsaufbau gewährleistet bei bestimmten verlustreichen Transformatoren 1 unter Umständen nicht, daß die einen kleinen Einschaltspitzenstrom 25 hervorrufende Sättigung 124 sicher erreicht wird.

Das Ausgangssignal des Sägezahngenerators weist eine positive Steigung auf, die vom Spannungswert 0 Volt beim Start der Rampe bis zu einer vorgegebenen Maximalspannung verläuft, bei welcher sie durch den nächsten Nulldurchgang der Netzwechselspannung 10 wieder zurückgesetzt wird, der etwas vorauseilend am Synchronisationseingang 169 der Anschnittsteuerschaltung 146 anliegt. Das auf der Leitung 166 anliegende Kondensatorspannungssignal fällt über mehrere Perioden ab. Im Analogkomparator wird die Spannung des Kondensators 63 mit der jeweiligen Spannung der Rampe des Sägezahngenerators verglichen und falls die Spannung des Sägezahngenerators größer ist, ein Pegel Eins-Signal auf der Leitung 154 ausgegeben, welches zu einem Zündsignal über das ODER-Gatter 156 an der Steuerelektrode 158 für den Triac 38 führt, so daß ein stetig wachsender Anschnitt vor jedem zweiten Nulldurchgang der Netzwechselspannung 10 entsteht.

Bei Erreichen der Sättigung 119 des Transformators 1 tritt nach der nächsten angeschnittenen negativen Halbwelle ein Einschaltspitzenstrom 25 auf, der durch eine Spannungsmessung über dem Meßshunt 39 in dem negativen Stromwandler 88 erkennbar ist.

Der Ausgang des negativen Stromwandlers 88 ist über einen Widerstand 89 an einen Eingang eines Analogkomparators 92 angeschlossen. Der andere Eingang 190 ist über einen Spannungsteiler-Widerstand 91 an die positive Betriebsspannung 33 über einen Spannungsteilerwiderstand 91′ an Schaltungsmasse 34 angeschlossen. Der Analogkomparator 92 erzeugt nur dann ein positives Ausgangssignal, wenn der negative Stromwandler 88 ein genügend großes positives Signal abgibt. Diese Schwellen-Signalhöhe hängt von dem vorherbestimmten Verhältnis der Widerstände 91 und 91′ zueinander ab. Vorzugsweise ist das am Eingang 191 des Analogkomparators 92 anliegende Vergleichsspannungssignal derart eingestellt, daß am Ausgang des Analogkomparators 92 ein positives, auf einen kleinen Einschaltspitzenstrom hin deutendes Ausgangssignal dann anliegt, wenn im Primärkreis des Transformators 1 ein im Wert zwischen dem 2-fachen und 10-fachen des Nennstromes 126 liegender Strom auftritt.

Der Ausgang 92′ des Analogkomparators 92 ist mit dem Setzeingang 193 eines Flip-Flop-Gliedes 51 verbunden, das durch die aufsteigende Signalflanke geschaltet wird. Der Ausgang 194 des Flip-Flop-Gliedes 51 ist mit dem Steuereingang eines Schalters 196 verbunden. Der Schalter 196 verbindet die Schaltungsmasse 34 über einen Widerstand 197 mit dem RC-Glied 63, 64, mit dem die Vergleichssteuerspannung festsetzbar ist. Durch Schließen des Schalters 196 beim Auftreten eines Überstromes wird der Kondensator 63 schnell entladen, wodurch ein Zündsignal auf der positiven Schaltleitung 153 sofort zu Beginn der unnmittelbar folgenden positiven Halbwelle anliegt, das einen Eingang eines UND-Gatters 95 beaufschlagt. Gleichzeitig beaufschlagt das Pegel-Eins-Ausgangssignal 194 des Flip-Flops 51 den anderen Eingang des UND-Gatters 95, wodurch ein Pegel-Eins-Ausgangssignal des UND-Gatters 95 an einem zweiten Eingang des ODER-Gatters 56 anliegt, so daß das durchgeschaltete Pegel-Eins-Signal den Triac 38 in der positiven Halbwelle 114 mit einem Winkel von 170° bis 180° zünden kann.

Außerdem beaufschlagt das Netz-Ein-Signal 44 den Rücksetzeingang 49 des Flip-Flop-Gliedes 51, so daß das oben beschriebene Remanenzsetzen jeweils nach jedem Netz-Ein- bzw. Unterstromerkennungssignal des Netzteiles 31 durchführbar ist.

An dem invertiertem Ausgang des Flip-Flops 51 ist eine Lumineszenzdiode 198 über einen Schutzwiderstand 198′ an Schaltungsmasse 34 geschaltet. Die Leuchtdiode 198 leuchtet als Hinweis für einen Benutzer, solange das Remanenzsetzen nicht stattgefunden hat.

Es kann ein weiterer in der Zeichnung nicht dargestellter Sollwertschalter mit seinem einen Kontakt an ein Potentiometer angeschlossen sein, das zwischen der positiven Betriebsspannung 32 und der Schaltungsmasse 34 angeordnet ist. Dieser zusätzliche Setzschalter wird über ein Verzögerungsglied erst dann geschlossen, wenn das Remanenzsetzen durchgeführt wurde.

Dieser zusätzliche Dimm-Sollwertschalter ist über einen Widerstand in Reihe mit dem Kondensator 163 verbunden und umfaßt ein vom Bediener einstellbares Potentiometer, mit dessen Hilfe die Spannung des Kondensators 163 zwischen der positiven Versorgungsspannung 32 und der Schaltungsmasse 34 einstellbar ist, so daß sich ein vom Bediener festgelegter Plateaubereich in der Spannung des Kondensators 163 ergibt, so daß in den folgenden Halbwellen immer der gleiche vorbestimmte und symmetrische Anschnittwinkel verwendet wird, der zu dem gewünschten gedimmten Zustand des Transformators 1 und der an diesem angeschlossenen Last führt.

Die in Fig. 15 an einem Einphasennetztransformator vorgestellte Schaltung kann auf ein mehrphasiges, induktivitätsbehaftetes Stromversorgungsgerät erweitert werden, wobei mindestens in zwei weiteren Zweigen der Zweige R, S und T jeweils in den durchgehenden Leitungen weitere Wechselstromschalter 38 vorgesehen sind, die vorzugsweise über potentialtrennende Optokoppler von jeweils einer eigenen Anschnittsteuerschaltung 146 angesteuert werden.

Die Fig. 16 zeigt Signalverläufe beim Einschalten des Transformators 1 mit einer Vorrichtung gemäß einem Ausführungsbeispiel der Erfindung. Die Netzspannung 10 ist zu einem beliebigen, in der Zeichnung nicht dargestellten Zeitpunkt abgeschaltet worden. Die Remanenz ist dadurch beliebig positiv oder negativ gesetzt und wird durch die negativen, im Stromfluß-Winkelwert monoton steigenden Anschnitte 117, 121 und 123 in die Sättigung verschoben, so daß die in der Fig. 15 dargestellte Schaltung auf den kleinen Einschaltspitzenstrom-Impuls 25 reagiert, da der Strom das z.B. 2-fache des Nennstromes überschritten hat und einen großen positiven Anschnittwinkel 198′ erzeugt, dem weiter in beiden Halbwellenpolaritäten große Winkel oder auch durch anschließend selbsttätige langsame Änderungen des großen Winkels auch wieder kleinere Anschnittwinkel folgen können. Anstelle dieser, durch den Komparator voreingestellte Schwelle des 2-fachen des Nennstromes kann zum Beispiel auch das 0,5 fache oder das 5-fache des Nennstromes als Auslöseschwelle verwendet werden.

Die Transformator-Remanenz war in Fig. 16 im Prinzip nach dem zweiten negativen Anschnitt 121 richtig gesetzt, wobei der nachfolgende dritte negative Anschnitt 123 dazu ausgenützt wird, den kleinen Einschaltspitzenstrom 25 zu erzeugen, um mit dessen Hilfe in den Dauerbetrieb mit konstanten Anschnittwinkeln 197′ für positive und negative Halbwellen umschalten zu können.
Die in Fig. 16 abgebildeten unipolaren und größerwerdenden Anschnitte 117, 121 und 123 weisen bis zum Erreichen des kleinen Einschaltspitzenstromes 25 eine wachsende Asymetrie auf. Wenn die Polarität des ersten Anschnittes der Remanenzpolarität entgegengesetzt ist, wird die Remanenz in einer Vielzahl von Anschnitten definiert in die andere Sättigungsrichtung verschoben, wobei die langsamwachsenden Winkelwerte gewährleisten, daß die Sättigung trotz eventuell auftretenden Leistungsverlusten sicher erreicht wird.

Ist jedoch die Polarität der durch den Zeitpunkt des Ausschaltens gegebenen Remanenz und des ersten Anschnittes 117 gleich, so stellt sich je nach den Eigenschaften des Trafos 1 schon nach wenigen Anschnitten und bei einer bestimmten Größe des Anschnittes ein Primärkreisstrom-Impuls 26 ein der über den vorbestimmten Wert des Nennstromes hinausgeht und dieser Einschaltspitzenstrom 25 von zum Beispiel dem 2-fachen des Nennstromes als die Meldung des Trafos verstanden wird, daß seine Remanenz nun in die Richtung des Stromes 25 gesetzt ist. Der sofort anschließend folgende Anschnitt mit einem großen Winkel und entgegengesetzter Polung führt dann zu Dauerbetrieb des Trafos. Dieser Anschnittwinkel 198′ ist größer als 150°, wenn der Beginn der positiven Halbwelle mit 0 Grad definiert wird und kann auch die ganze positive Halbwelle, also 180° umfassen.
Dieser durch ein an dem Setzschalter 61 eventuell angeschalteten Potentiometer voreinstellbarer Anschnittwinkel 198′ ist für den verwendeteten Transformator 1 typisch.
Natürlich kann die Schaltung der Fig. 15 auch in einer entsprechenden anders gepolten Weise aufgebaut werden, so daß der erste Anschnittwinkel 117 vor einem positiven Nulldurchgang einer negativen Halbwelle 118 auftritt und ein dementsprechend anders gepolter Einschaltspitzenstrom zum Ansprechen des Komparators zur Erzeugung der Remanenz setzenden Halbwelle führt. Diese Halbwelle mit dem Anschnittwinkel 198′ ist dann entsprechend in einer positiven Halbwelle 114 angeschaltet. Das UND-Gatter 95 ist dann in die negative Schaltleitung 154 gelegt und der negative Stromwandler 88 durch einen positiven Stromwandler ersetzt.

Der Meßshunt 39 kann zum Beispiel einen Widerstandswert von 0,1 Ohm aufweisen. Der Ladewiderstand 62 und der Widerstand 197 verfügen über einen Widerstand von zum Beispiel 12 Ohm und der Entladewiderstand 64 über einen Widerstandswert von 1,2 Kiloohm, damit bei einem nötigen Volllastbetrieb ohne Anschnitt keine Lücke im Strom 26 durch einen kleinen Anschnitt entsteht.

## Patentansprüche

1. Verfahren zur Reduzierung des Einschaltstromstoßes beim Betreiben einer induktivitätsbehafteten und mit einem magnetisierbaren Kern versehenen Last (1, 301) an einem Wechselstromnetz, wobei zumindest zeitweise ein Phasenanschnitt vorgesehen ist, **dadurch gekennzeichnet,** daß bei gleichzeitiger Messung zumindest des Blindstromes im Laststromkreis die effektive Spannung an der Last durch Vergrößern der Spannungshalbwellenabschnitte (17, 21, 23) (Stromflußwinkel) solange vergrößert wird, bis ein vorgegebener Stromschwellwert (25/311) auftritt und daß die Last nach Auftreten dieses gemessenen Schwellwertes mit einer zu der vor dem Auftreten des Stromschwellwertes anliegenden Spannung gegenpoligen und in ihrem Effektivwert größeren Spannung beaufschlagt wird, und daß bei Ausbleiben des Stromes in Höhe des Stromschwellwertes der Effektivwert der Spannung bis zu einem Sollwert oder bis zum Nennwert erhöht wird.

2. Verfahren zur Reduzierung des Einschaltstromstoßes beim Betreiben einer induktivitätsbehafteten und mit einem magnetisierbaren Kern versehenen Last (1, 301) an einem Wechselstromnetz, wobei zumindest zeitweise ein Phasenanschnitt vorgesehen ist, dadurch gekennzeichnet, daß bei gleichzeitiger Messung zumindest des Blindstromes im Laststromkreis, die effektive Spannung an der Last durch Vergrößern der Spannungshalbwellenabschnitte (17, 21, 23) (Stromflußwinkel) solange vergrößert wird, bis ein vorgegebener Stromschwellwert (25/311) auftritt, daß die Last nach Auftreten dieses gemessenen Schwellwertes abgeschaltet wird, daß nach einer Pause, die weniger als eine Wechselspannungsperiode betragen kann mit einer zu der vor dem Auftreten des Stromschwellwertes anliegenden Spannung gleichpoligen und in ihrem Effektivwert kleineren Spannung beaufschlagt wird und daß bei Ausbleiben des Stromes in Höhe des Stromschwellwertes der Effektivwert der Spannung bis zu einem Sollwert oder bis zum Nennwert erhöht wird.

3. Verfahren nach Anspruch 1 oder 2, dadurch gekennzeichnet, daß die Vergrößerung der effektiven Spannung an der Last (1, 301) durch unipolares Andimmen, bewirkt durch Verkleinerung des Phasenanschnittwinkels, vorgenommen wird.

4. Verfahren nach Anspruch 1 oder 2, dadurch gekennzeichnet, daß die Vergrößerung der effektiven Spannung an der Last (1, 301) durch bipolares Andimmen, bewirkt durch Verkleinerung des Phasenanschnittwinkels, vorgenommen wird.

5. Verfahren nach einem der Ansprüche 1 bis 3, wobei an ein dreiphasiges Wechselstromnetz eine Drehstrom-Last (301a) mit drei Wicklungen wahlweise in unterschiedlichen Schaltgruppen angeschlossen ist, dadurch gekennzeichnet, daß bei einer im Dreieck oder im Stern geschalteten Schaltgruppe zunächst über zwei Phasen durch Vergrößern der Spannungshalbwellenabschnitte(Stromflußwinkel) zunehmend bestromt wird, bis der vorgegebene Blindstromschwellwert im Bereich der Eisensättigung erreicht ist, daß dann diese zwei Phasen gegenpolig zu der vor dem Auftreten des Stromschwellwertes anliegenden Spannung eingeschaltet werden und die dritte Phase zeitverzögert zu den beiden anderen Phasen zugeschaltet wird oder daß bei Erreichen des vorgegebenen Blidstromschwellwertes die Bestromung ausgeschaltet wird, daß anschließend zwei Phasen jeweils in der gleichen Polaritätslage und mit einem kleineren Stromflußwinkel der Spannungshalbwellen eingeschaltet werden, welche die jeweiligen vorausgegangenen Strompulse vor dem Erreichen oder Überschreiten des Blindstromschwellwertes der einzelnen Phasen erzeugten und daß anschließend die dritte Phase zeitverzögert zu den beiden anderen Phasen zugeschaltet wird.

6. Verfahren nach Anspruch 5, dadurch gekennzeichnet, daß das Einschalten der beiden Phasen bezüglich der nacheilenden Phase mit einem solchen Spannungshalbwellenanschnitt erfolgt, daß dieser einen im Bereich des Leerlaufstromes liegenden Blindstrom-Impuls verursacht und daß das zeitverzögerte Zuschalten der dritten Phase derart erfolgt, daß die Summe der Blindströme aller drei Phasen zur Vermeidung von Unsymmetrie im weiteren Verlauf etwa Null ist.

7. Verfahren nach einem der Ansprüche 1 bis 3, wobei an ein dreiphasiges Wechselstromnetz eine Drehstrom-Last (301a) mit drei Wicklungen wahlweise in unterschiedlichen Schaltgruppen angeschlossen ist, dadurch gekennzeichnet, daß bei einer im Stern mit Mittelpunktleiter geschalteten Schaltgruppe zunächst eine erste Phase gegen den Mittelpunktleiter eingeschaltet und durch Vergrößern der Spannungshalbwellenabschnitte(Stromflußwinkel) zunehmend bestromt wird, bis der vorgegebene Blindstromschwellwert im Bereich der Eisensättigung erreicht ist, daß dann diese Phase gegenpolig zu der vor dem Auftreten des Stromschwellwertes (311) anliegenden Spannung eingeschaltet wird und die beiden anderen Phasen zeitverzögert zu der ersten Phase zugeschaltet werden, wenn die Summe der Blindströme aller drei Phasen etwa 0 ist und in allen drei Phasen gleiche, zueinander symmetrische Ströme fließen oder daß beim Erreichen des Stromschwellwertes (311) die Bestromung ausgeschaltet wird, daß anschließend die erste Phase in der gleichen Polaritätslage und mit einem kleineren Stromflußwinkel der Spannungshalbwelle eingeschaltet wird, welche den vorausgegangenen Blindstromimpuls vor dem Erreichen oder Überschreiten des Bildstromschwellwertes erzeugte und daß dann die beiden anderen Phasen zeitverzögert zu der ersten Phase zugeschaltet werden.

8. Verfahren nach Anspruch 7, dadurch gekennzeichnet, daß das Einschalten der ersten Phase mit einem solchen Spannungshalbwellenanschnitt erfolgt, daß dieser einen im Bereich des Leerlaufstromes liegenden Blindstrom-Impuls verursacht.

9. Verfahren nach einem der Ansprüche 1 bis 3 und 5 bis 8, dadurch gekennzeichnet, daß zum Bestimmen des Spannungshalbwellenanschnittes zu Beginn des Einschaltens etwa der Spitzenwert des Leerlaufblindstromes als Schwellwert vorgegeben wird, daß die Spannungshalbwellen-Abschnitte bis zum Erreichen dieses Stromschwellwertes vergrößert werden und daß der zugehörige Spannungsanschnittwinkel abgespeichert wird.

10. Verfahren nach Anspruch 1 bis 3 und 5 bis 9, dadurch gekennzeichnet, daß bei einer Scheinlast der Blindstromanteil und der Wirkstromanteil gemessen werden, daß der Spannungshalbwellenanschnitt soweit vergrößert wird, bis der Spitzenwert des Blindstromimpulses etwa gleich dem Spitzenwert des Wirkstromimpulses ist und daß der zugehörige Spannungshalbwellenanschnittwert abgespeichert wird.

11. Verfahren nach Anspruch 4, wobei ein dreiphasiges Wechselstromnetz an eine Drehstromlast mit drei Wicklungen wahlweise in unterschiedlichen Schaltgruppen angeschlossen ist, dadurch gekennzeichnet, daß alle drei Phasen bipolar gleich und zunehmend mit gleichen Anschnittwinkeln angedimmt werden und daß bei Überschreiten einer vorgegebenen Blindstromschwelle gegenphasig zu dem aufgetretenen Blindstromimpuls mit vergrößertem Stromflußwinkel (λ) weiterbestromt wird.

12. Verfahren nach einem der Ansprüche 1 bis 3 oder 5 bis 11, dadurch gekennzeichnet, daß bei einem Pulsgruppenbetrieb und variabler Scheinlast der Blindstrom laufend gemessen wird und daß beim Überschreiten eines vorgegebenen Wertes, insbesondere bei Überschreiten des momentanen Wirkstromwertes, der Stromflußwinkel der jeweils ersten eingeschalteten Spannungshalbwelle bei zu deren Polarität gleicher Polarität des Blindstromimpulses verkleinert wird und bei gegensätzlicher Polarität der Stromflußwinkel vergrößert wird.

13. Verfahren nach einem der Ansprüche 5 bis 12, dadurch gekennzeichnet, daß zur Erkennung der an das Drehstromnetz angeschlossenen Last-Schaltgruppe zunächst eine Phase gegen den Sternpunkt mit großem Phasenanschnittwinkel und entsprechend kleinem Spannungseffektivwert beaufschlagt und dabei eine Stromkontrolle vorgenommen wird.

14. Vorrichtung zur Begrenzung des Einschaltstromes einer induktivitätsbehafteten, mit einem magnetisierbaren Kern versehenen Last, insbesondere eines Transformators (1), wobei die Vorrichtung einen in Reihe zur Last geschalteten, mit einer Phasenanschnittsteuerung (303, 303a) verbundenen Wechselstromschalter (302/38) aufweist, insbesondere zur Durchführung des Verfahrens nach einem der Ansprüche 1 bis 13, **dadurch gekennzeichnet,** daß eine Strommeßeinrichtung (305, 305a, 305b) zumindest für den im Laststromkreis fließenden Blindstrom vorgesehen ist, daß diese Strommeßeinrichtung sowie die Phasenanschnittsteuerung mit einer Ablaufsteuerung (306, 306a) verbunden sind, zur Vergrößerung der effektiven Spannung an der Last sowie zur Blindstrom-abhängigen Beeinflussung der Phasenanschnittsteuerung beim Auftreten eines Stromschwellwertes entweder im Sinne einer Veränderung der Polarität der an die Last geschalteten Spannung sowie einer Verkleinerung des Phasenanschnittwinkels oder bei einer nach dem Auftreten eines Stromschwellwertes vorgesehenen Pause, die weniger als eine Wechselspannungsperiode betragen kann, im Sinne einer Wiederholung einer vor dem Auftreten des Stromschwellwertes vorhandenen, angeschnittenen Spannungshalbwelle und anschließender, gegenphasiger Spannungs-Beaufschlagung und beim Ausbleiben des Blindstromes in Höhe des Stromschwellwertes im Sinne einer Erhöhung der effektiven Spannung bis zu einem Sollwert beziehungsweise bis zum Nennwert.

15. Vorrichtung nach Anspruch 14, wobei durch die Phasenanschnittschaltung (48, 54, 63, 64, 65, 67) die Verbindung der induktivitätsbehafteten Last (1) mit der Netzwechselspannung (10) ab dem Einschaltmoment (17) mit stetig ansteigendem Stromflußwinkel einstellbar ist und wobei eine Bildstrom-abhängige Beeinflussung der Phasenanschnittsteuerung beim Auftreten eines Stromschwellwertes im Sinne einer Veränderung der Polarität der an die Last geschalteten Spannung sowie einer Verkleinerung des Phasenanschnittwinkels vorgesehen ist, dadurch gekennzeichnet, daß eine in Reihe mit der induktivitätsbehafteten Last (1) geschaltete Komparatorschaltung (39, 50, 87, 88, 92) vorgesehen ist, deren Ausgang (93) mit der Phasenanschnittschaltung (48, 63, 64, 96) verbunden ist, daß die Phasenanschnittschaltung (48, 54, 63, 64, 65, 67) bei einer Beaufschlagung mit einem von der Komparatorschaltung (50, 87, 88, 92) erzeugten Primärkreis-Überstromsignal (93) die Steuerelektrode (55) des Wechselstromschalters (38) für mindestens eine Halbwelle mit einem Zündsignal mit einem vorbestimmten, Remanenz-setzenden Phasenanschnittwinkel (198) beaufschlagt, wobei der Remanenz-setzende Phasenanschnittwinkel (198) kleiner als der dem Auftreten des Primärkreis-Überstromsignals (93) zuordbare Anschnittwinkel (23, 86) ist, und daß in der Phasenanschnittschaltung (48, 54, 63, 64, 65, 67) in den den Remanzen-setzenden Halbwellen (198) folgenden Halbwellen jeweils ein Zündsignal bei dem vorbestimmten Phasenanschnittwinkel erzeugbar ist.

16. Vorrichtung nach Anspruch 14, wobei durch die Phasenanschnittschaltung (48, 54, 63, 64, 65, 67) die Verbindung der induktivitätsbehafteten Last (1) mit der Netzwechselspannung (10) ab dem Einschaltmoment (17) mit stetig ansteigendem Stromflußwinkel einstellbar ist, dadurch gekennzeichnet, daß die Phasenanschnittschaltung (146, 56, 95) die besagte Verbindung nur mit unipolaren Phasenanschnitten (117, 121, 123) herstellt , daß die Phasenanschnittschaltung (146, 56, 95) bei einer Beaufschlagung mit einem von der Komparatorschaltung (88, 92) erzeugten Primärkreis-Überstromsignal (25) die Steuerelektrode (158) des Wechselstromschalters (38) für die zeitlich unmittelbar folgende, entgegengesetzt gepolte Halbwelle (198′) und die unmittelbar nächsten folgenden Vollwellen mit einem Zündsignal von 150 bis 180° beaufschlagt und daß in der Phasenanschnittschaltung (146, 56, 95) bei den der Halbwelle (198) folgenden Halbwellen (199) jeweils ein Zündsignal bei dem vorbestimmten Phasenanschnittwinkel (197′) erfolgt ist (Fig. 15).

17. Vorrichtung nach Anspruch 15 oder 16, dadurch gekennzeichnet, daß die Phasenanschnittschaltung (48, 54, 63, 64, 65, 67) eine im Ausgangsspannungswert zeitlich veränderliche Spannungsspeicherschaltung (63, 64) und einen Funktionsgenerator (67, 68, 69) aufweist, wobei der Spannungswert (66) der Spannungsspeicherschaltung (63, 64) mit einer zur Netzwechselspannung (10) periodisch sich verändernden Rampenspannung (81) des Funktionsgenerators (67, 68, 69) in einem Komparator (65) vergleichbar ist, und daß mit dem Komparator (65) bei Gleichheit der beiden Spannungssignale (66, 81) ein die Steuerelektrode (55) beaufschlagendes Zündsignal erzeugbar ist (Fig. 12).

18. Vorrichtung nach Anspruch 17, dadurch gekennzeichnet, daß die Spannungsspeicherschaltung (63, 64) ein RC-Glied in Gestalt einer Kapazität (63) und eines parallel geschalteten Entladewiderstandes (64) umfaßt, daß mit dem Sägezahngenerator (67) eine anwachsende Rampenspannung (81) erzeugbar ist und daß bei Gleichheit dieser Spannung (81) mit der kleiner werdenden Kondensatorspannung (66) das Zündsignal in dem Komparator (65) erzeugbar ist.

19. Vorrichtung nach Anspruch 17 oder 18, dadurch gekennzeichnet, daß ein Anfangsspannungseinstellschaltkreis (61, 62) vorgesehen ist, mit dem die Spannungsspeicherschaltung (63, 64) beim Einschalten der Last beziehungsweise des Stromversorgungsgerätes (1) auf einen vorbestimmten Spannungswert einstellbar (61) ist.

20. Vorrichtung nach einem der Ansprüche 17 bis 18, dadurch gekennzeichnet, daß ein Dauerbetriebsschaltkreis (96, 97, 98) vorgesehen ist, mit dem der Spannungspegel der Spannungsspeicherschaltung (63, 64) nach einem PrimärkreisÜberstromsignal (97, 20) derart setzbar ist, daß das Zündsignal des vorbestimmten Phasenanschnittwinkels (198) im Komparator der Anschnittsteuerschaltung erzeugbar ist.

21. Vorrichtung nach Anspruch 20, dadurch gekennzeichnet, daß ein Meßshunt (39) in Reihe mit der Last (1) geschaltet ist, daß der Spannungsabfall über dem Meßshunt (39) mit einer Komparatorschaltung (87, 88, 91, 92) erfaßbar ist, daß in der Komparatorschaltung (87, 88, 91, 92) der durch den Meßshunt (39) erfaßte Iststrom mit einem maximalen Sollstrom vergleichbar ist, bei dessen Überschreiten die Spannungsspeicherschaltung (63, 64) auf den Remanenz-setzenden Phasenanschnittwinkel (198) setzbar ist.

22. Vorrichtung nach einem der Ansprüche 17 bis 21, dadurch gekennzeichnet, daß zur Erzeugung des Überstromsignals (97, 20) der maximale Sollstrom zwischen dem 1fachen bis zum 10fachen des Nennstromes einstellbar ist (91, 91′, 205).

23. Vorrichtung nach einem der Ansprüche 17 bis 22, dadurch gekennzeichnet, daß in der Phasenanschnittschaltung (48, 54, 63, 64, 65, 67) ein Sollwertschaltkreis (48, 98˝; 99) vorgesehen ist, mit dem über ein Verzögerungsglied (50) in den der Remanenz-setzenden Halbwellen (97, 198) folgenden Halbwellen jeweils die Spannungsspeicherschaltung (63, 64) auf einen vorbestimmten (99) Spannungswert einstellbar ist, so daß ein Zündsignal bei dem vorbestimmten Phasenanschnittwinkel (100, 110) erzeugbar ist.

24. Vorrichtung nach einem der Ansprüche 17 bis 23, dadurch gekennzeichnet, daß mindestens ein Lastfehlererkennungsschaltkreis (211, 212) vorgesehen ist, der beim Überschreiten und/oder beim Unterschreiten eines Sollstrombereiches (216) den Wechselstromschalter (38) sicher öffnet.

25. Vorrichtung nach Anspruch 24, dadurch gekennzeichnet, daß beim Auftreten eines Unterstromes ein Teillastschaltkreis den Spannungswert (66) der Spannungsspeicherschaltung (63, 64) derart einstellt, daß jeweils nur ein kleiner Anschnittwinkel je Halbwelle angeschaltet ist.

26. Vorrichtung nach einem der Ansprüche 18 bis 25, dadurch gekennnzeichnet, daß die Phasenanschnittschaltung (146, 56, 95) eine im Ausgangsspannungswertzeitlich veränderliche Spannungsspeicherschaltung (163, 64) und einen Funktionsgenerator aufweist, wobei der Spannungswert (66) der Spannungsspeicherschaltung (163, 64) mit einer zur Netzwechselspannung (10) periodisch sich verändernden Rampenspannung des Funktionsgenerators in einem Komparator vergleichbar ist, und daß mit dem Komparator bei Gleichheit der beiden Spannungssignale ein Steuersignal auf einer Polarität der Netzwechselspannung (10) entsprechenden und die Steuerelektrode (158) beaufschlagenden Schaltleitungen (153 bzw. 154) erzeubar ist, wobei in einer der beiden Schaltleitungen eine Logikschaltung (51, 95) vorgesehen ist, die mit dem Ausgang der Komparatorschaltung (88, 92) verbunden ist und mit der diese Signalleitung solange sperrbar ist, bis die Komparatorschaltung (88, 92) ein Überstromsignal (25) detektiert hat.

27. Vorrichtung nach einem der Ansprüche 16 bis 26, dadurch gekennzeichnet, daß ein Meßshunt (39) in Reihe mit dem Stromversorgungsgerät (1) geschaltet ist daß der Spannungsabfall über dem Meßshunt (39) mit der Komparatorschaltung (88, 92) erfaßbar ist, daß in der Komparatorschaltung (88, 92) der durch den Meßshunt (39) erfaßte Iststrom mit einem maximalen Sollstrom vergleichbar ist, bei dessen Überschreiten die Spannungsspeicherschaltung mit einem Setzschalter (96) auf den Phasenanschnittwinkel (198′) setzbar ist und daß dieser Phasenschnittwinkel (198′) nach einigen Perioden beginnt, fließend zum Phasenanschnittwinkel (197′) überzugehen.

28. Vorrichtung nach einem der Ansprüche 16 bis 27, dadurch gekennzeichnet, daß ein Phasenschieber-Schaltkreis (148′, 48′′) zwischen dem Netzteil (31) und der Anschnittsteuerschaltung (146) vorgesehen ist, mit dem die Synchronisationsspannung der Ansteuerschaltung (146) der Netzspannung (10) vorauseilend einstellbar ist.

29. Vorrichtung nach einem der Ansprüche 14 bis 28, dadurch gekennzeichnet, daß sie zur Bestimmung eines Spannungshalbwellenanschnittes für ein praktisch Inrush-freies Einschalten einer Scheinlast, insbesondere bei einem Betrieb mit Pulsgruppen, eine Meßeinrichtung (318, 320) für den Blindstrom sowie eine Meßeinrichtung (319, 321) für den Wirkstrom und eine Einrichtung zum Vergleich dieser Meßwerte sowie zum Abspeichern eines bei etwa gleichen Meßwerten anstehenden Spannungshalbwellenanschnitt-Wertes aufweist.

30. Vorrichtung nach einem der Ansprüche 14 bis 28, dadurch gekennzeichnet, daß eine an ein Drei-Phasennetz angeschlossene Drehstromlast mit in den Phasenzweigen befindlichen Wechselstromschaltern und zumindest für zwei Phasenzweige eine Strommeßeinrichtung vorgesehen ist und daß sie eine Ablaufsteuerung (306a) zumindest zur Bestimmung der einzelnen Phaseneinschaltzeitpunkte aufweist.

31. Vorrichtung nach Anspruch 30, dadurch gekennzeichnnet, daß eine Schaltgruppen-Erkennungseinrichtung vorgesehen ist mit einer Folgesteuerung zum zeitlich versetzten Bestromen der einzelnen Phasen.

## Claims

1. A process for reducing the inrush current during the operation of an inductive load (1, 301) provided with a magnetizable core in an a.c. mains, whereby at least temporarily phase control is provided, characterized in that during simultaneous measurement of at least the idle current in the load circuit the effective voltage on the load is increased by increasing the voltage half-wave operating angles (17, 21, 23) (current flow angle) until a predefined current threshold (25/311) occurs and that the load, after the occurrence of said measured threshold, is supplied with a voltage which is of opposite polarity to the voltage applied efore the occurrence of the current threshold value and which is higher in its effective value and that if the current at the level of the current threshold value does not occur, the effective value of the voltage is increased up to a set value or up to nominal value.

2. A process for reducing the inrush current during the operation of an inductive load (1, 301) provided with a magnetizable core in an a.c. mains, whereby phase control is provided at least temporarily, characterized in that during simultaneous measurement of at least the idle current in the load circuit, the effective voltage on the load is increased by increasing the voltage half-wave operating angles (17, 21, 23) (current flow angle) until a predefined current threshold (25/311) occurs, that the load is cut off after the occurrence of said measured threshold, and that after a break which may take less than one alternating voltage period the load is supplied with a voltage which is of similar polarity to the voltage applied before the occurrence of the current threshold and which is smaller in its effective value and that if the current does not occur at the level of the current threshold value, the effective value of the voltage is increased to a set value or up to a ncminal value.

3. A process as claimed in claim 1 or 2, characterized in that the increase of the effective voltage on the load (1, 301) is carried out by unipolar dimming, caused by reducing the phase operating angle.

4. A process as claimed in claim 1 or 2, characterized in that the increase of the effective voltage on the load (1, 301) is made by bipolar dimming, which is caused by reducing the phase operating angle.

5. A process as claimed in one of the claims 1 to 3, whereby a three-phase load (301a) with three windings is connected in a three-phase alternating current mains optionally to three different switching groups, characterized in that in a switching group with a triangle or star connection, current is supplied at first through two phases by increasing the voltage half-wave operating angles (current flow angle) until the predefined idle current threshold value is reached in the area of the iron saturation, and that said two phases are cut in in opposite polarity to the voltage applied before the occurrence of the current threshold value and the third phase is cut in to the other two phases with a delay or that on reaching the predefined idle current threshold value the supply of current is cut off, that thereafter two phases are cut in in the same polarity relationship and with a smaller forward flow angle of the voltage half-waves which produced the respective previous current pulses before the arrival at or transgression of the idle current value of the individual phases and that thereafter the third phase is cut in with a delay to the other two phases.

6. A process as claimed in claim 5, characterized in that the cut-in of the two phases with respect to the following phase is made with such a voltage half-wave operating angle, so that it causes an idle current pulse situated in the area of the idle current and that the delayed cut-in of the third phase is made in such a way that the sum of all idle currents of all three phases is approx. zero so as to avoid unsymmetry during the further process.

7. A process as claimed in one of the claims 1 to 3, whereby a three-phase load (301a) with three windings is connected in a three-phase alternating current mains optionally to three different switching groups, characterized in that in a switching group with a star connection with a midpoint conductor a first phase is cut in towards the mid-point conductor and is increasingly supplied with current by increasing the voltage half-wave operating angles (current flow angle) until the predefined idle current threshold has been reached in the area of iron saturation, and that said phase is cut in in opposite polarity to the voltage which was applied before the occurrence of the current threshold value (311) and the two other phases are cut in with a delay with respect to the first phase when the total of all idle currents of all three phases is approx. 0 and currents flow in all phases which are similar and symmetrical to one another, that on reaching the current threshold value (311) the current supply is cut off and that thereafter the first phase is cut in in the same polarity relationship and with a smaller forward flow angle of the voltage half-wave which generated the previous idle current pulse before the arrival at or transgression of the idle current threshold value, and that thereafter the two other phases are cut in with a delay to the first phase.

8. A process as claimed in claim 7, characterized in that the cut-in of the first phase is made with such a voltage half-wave operating angle so that it causes an idle current pulse situated in the area of the idle current.

9. A process as claimed in one of the claims 1 to 3 and 5 to 8, characterized in that for determining the voltage half-wave operating angle at the beginning of the cut-in, approximately the peak value of the idle current is predefined as the threshold, that the voltage half-wave operating angles are increased until said current threshold is reached and that the pertinent voltage operating angle is stored.

10. A process as claimed in claim 1 to 3 and 5 to 9, characterized in that in an apparent load the idle current share and the effective current share are measured, that the voltage half-wave operating angle is increased until the peak value of the idle current pulse is approx. equivalent to the peak value of the effective current pulse and that the pertinent voltage half-wave operating angle value is stored.

11. A process as claimed in claim 4, whereby a three-phase a.c. mains is connected to a three-phase current load with three windings optionally in three different switching groups, characterized in that all three phases are bipolar equivalent and that they are dimmed with the same operating angles and that on exceeding a predefined idle current threshold, further current is supplied with increased current flow angle (2) in opposite phases to the occurred idle current pulse.

12. A process as claimed in one of the claims 1 to 3 or 5 to 11, characterized in that the idle current is continuously measured in pulsed group operation and variable apparent load and that on exceeding a predefined value, in particular on exceeding the momentary effective current value, the current flow angle of the respective first cut-in voltage halfwave is reduced at a polarity of the idle current pulse which is similar to the polarity thereof and that the current flow angle is increased when the polarity is opposite.

13. A process as claimed in one of the claims 5 to 12, characterized in that for recognizing the load switching group connected to the three-phase mains, at first one phase is supplied to the star point with a large phase operating angle and an accordingly small effective voltage value and that in this case a current check is made.

14. A device for limiting the inrush current of an inductive load provided with a magnetizable core, in particular a transformer (1), whereby the device is provided with an a.c. switch (302/38) which is connected in series with the load and which is connected to the phase control unit (303, 303a), in particular for carrying out the process in accordance with one of the claims 1 to 13, characterized in that a current measuring device (305, 305a, 305b) is provided at least for the idle current flowing in the load circuit, that said current measuring device as well as the phase control unit are connected to a sequential control (306, 306a) for increasing the effective voltage on the load as well as for influencing the phase control depending on the idle current during the occurrence of a current threshold either in the sense of changing the polarity of the voltage switched in the load as well as for a reduction of the phase operating angle or during a break provided after the occurrence of a current threshold value which may be less than one alternating voltage period in the sense of a repetition of a phase-controlled voltage half-wave existing before the occurrence of the current threshold value and a subsequent counter-phase voltage supply and when the idle current at the level of the current threshold value does not occur, in the sense of an increase of the effective voltage until a set value or up to the nominal value.

15. A device as claimed in claim 14, whereby by means of the phase cotnrol circuit (48, 54, 63, 64, 65, 67) the connection of the inductive load (1) with the alternating mains voltage (10) from the cut-in moment (17) is adjustable with continuously rising current flow angle and whereby an influence on the phase control unit which is dependent on the idle current during the occurrence of a current threshold in the sense of a change of the polarity of the voltage applied to the load as well as a reduction of the phase operating angle is provided, characterized in that a comparator circuit (39, 50, 87, 88, 92) connected in series with the inductive load (1) is provided whose output (93) is connected with the phase control circuit (48, 63, 64, 96), that the phase control circuit (48, 54, 63, 64, 65, 67), when supplied with a primary circuit excessive current signal (93) generated by the comparator circuit (50, 87, 88, 92), the control electrode (55) of the a.c. switch (38) is supplied at least for one half-wave with an ignition signal with a predefined, remanence-setting phase operating angle (198), whereby the remanence-setling phase operating angle (198) is smaller than the operating angle (23, 86) which is allocatable to the occurrence of the primary circuit excessive current signal (93), and that in the phase control circuit (48, 54, 63, 64, 65, 67) in the half-waves following the remanence-setting half-waves one ignition signal is produceable when a predefined phase operating angle is present.

16. A device as claimed in claim 14, whereby the connection of the inductive load (1) with the alternating mains voltage (10) is adjustable by the phase control circuit (48, 54, 63, 64, 65, 67) as from the cut-in moment (17) with continuously rising current flow angle, characterized in that the phase control circuit (146, 56, 95) produces said connection only with unipolar phase operating angles (117, 121, 123), that the phase control circuit (146, 56, 95), when supplied with a primary circuit excessive current signal (25) produced by the comparator circuit (88, 92), supplies the control electrode (158) of the a.c. switch (38) with an ignition signal from 150 to 180° for the half-wave (198′) which follows instantly afterwards and which is of opposite polarity and for the next following full-waves, and that in the phase control circuit 146, 56, 95) concerning the half-waves (199) following the half-wave (198) an ignition signal occurs at a predefined phase operating angle (197′).

17. A device as claimed in claim 15 or 16, characterized in that the phase operating circuit (48, 54, 63, 65, 67) is provided with a voltage storage circuit (63, 64) which over the time has a changeable output voltage value and with a function generator (67, 68, 69), whereby the voltage value (66) of the voltage storage circuit (63, 64) is comparable in a comparator (65) to a ramp voltage (81) of the function generator (67, 68, 69) periodically changing with respect to the alternating mains voltage (10), and that with the comparator (65) an ignition signal sent to the control electrode (55) is produceable (Fig. 12) when there is equivalency between the two voltage signals (66, 81).

18. A device as claimed in claim 17, characterized in that the voltage storage circuit (63, 64) comprises an RC module in form of a capacity (63) and a discharge resistor (64) connected in parallel, that a rising ramp voltage (31) is produceable with the saw-tooth generator (67) and that when said voltage (81) is equivalent with the decreasing capacitor voltage (66) the ignition signal is produceable in the comparator (65).

19. A device as claimed in claim 17 or 18, characterized in that an initial voltage set circuit (61, 62) is provided, with which the voltage storage circuit (63, 64) is adjustable to a predefined voltage value on switching on the load or the power supply unit (1).

20. A device as claimed in one of the claims 17 to 18, characterized in that a permanent operation circuit (96, 97, 98) is provided, with which the voltage level of the voltage storage circuit (63, 64) can be set after a primary circuit excessive current signal (97, 20) in such a way that the ignition signal of the predefined phase operating angle (198) is produceable in the comparator of the phase-control circuit.

21. A device as claimed in claim 20, characterized in that a measuring shunt (39) is connected in series with the load (1), that the voltage drop over the measuring shunt (39) can be detected by a comparator circuit (87, 88, 91, 92), that the actual current detected by the measuring shunt (39) is comparable to a maximum set current, so that when said maximum set current is exceeded the voltage storage circuit (63, 64) can be set to the remanence-setting phase operating angle (198).

22. A device as claimed in one of the claims 17 to 21, characterized in that for generating the excessive current signal (97, 20) the maximum set current can be set from one times to ten times the nominal current (91, 91′, 205).

23. A device as claimed in one of the claims 17 to 22, characterized in that in the phase operating circuit (48, 54, 63, 64, 65, 67) a set value circuit (48, 98˝; 99) is provided with which the voltage storage circuit (63, 64) can be set to a predefined voltage value (99) via a delay module (50) in the half-waves following the remanence-setting half-waves, so that an ignition signal is produceable at a predefined phase operating angle (100, 110).

24. A device as claimed in one of the claims 17 to 23, characterized in that at least one load fault recognition circuit (211, 212) is provided which on exceeding and/or falling below a set current range (216) securely opens the a.c. switch (38).

25. A device as claimed in claim 24, characterized in that when an undercurrent occurs, a partial load circuit sets the voltage value (66) of the voltage storage circuit (63, 64) in such a way that only a small phase operating angle is activated per half-wave.

26. A device as claimed in one of the claims 18 to 25, characterized in that the phase control circuit (146, 56, 95) comprises a voltage storage circuit (163, 64) which is changeable in the output voltage value over time and a function generator, whereby the voltage value (66) of the voltage storage circuit (163, 64) is comparable in a comparator to a ramp voltage of the function generator which changes periodically with respect to the alternating mains voltage (10), and that by means of the comparator and on equivalency of the two voltage signals a control signal is produceable on a switching line which is in accordance with the polarity of the alternating mains voltage (10) and which is supplied to the control electrode (158), whereby in one of the two switching lines there is provided a logic circuit (51, 95) which is connected to the output of the comparator circuit (88, 92) and with which said signal line can be blocked until the comparator circuit (88, 92) has detected an excessive current signal.

27. A device as claimed in one of the claims 16 to 26, characterized in that a measuring shunt (39) is connected in series with the power supply unit (1), that the voltage drop can be detected via the measuring shunt (39) with the comparator circuit (88, 92), that in the comparator circuit (88, 92) the actual current as detected by the measuring shunt (39) is comparable to a maximum set current, on exceeding of which the voltage storage circuit can be set to the phase operating angle (198′) with a set switch (96) and that said phase operating angle (198′) begins, after some periods, gradually to move towards the phase operating angle (197′).

28. A device as claimed in one of the claims 16 to 27, characterized in that a phase-shift circuit (148′, 48˝) between the power supply unit (31) and the phase-operating angle (146) is provided, with which the synchronization voltage the phase-control circuit (146) of the mains voltage (10) can be set in a preceding manner.

29. A device as claimed in one of the claims 14 to 28, characterized in that for determining a voltage half-wave operating angle for a practically inrushfree cut-in of an apparent load, in particular during the operation with pulsed groups, a measuring device (318, 320) for the idle current as well as a measuring device (319, 321) for the effective current and a device for comparing these measured values as well as for storing a voltage half-wave operating angle value appearing at approx. equivalent measured values.

30. A device as claimed in one of the claims 14 to 28, characterized in that a three-phase load connected to a three-phase mains comprises a.c. switches situated in the phase branches and at least one measuring device for at least two phase branches and that it comprises a sequential control unit (306a) at least for determining the individual phase switching points.

31. A device as claimed in claim 30, characterized in that a switching group recognition device is provided with a sequential control for supplying current to the individual phases which are shifted over time.

## Revendications

1. Procédé pour réduire l'impulsion de courant d'enclenchement lors de l'actionnement, dans un réseau de courant alternatif, d'une charge (1, 301) soumise à une inductance et munie d'un noyau magnétisable, procédé dans lequel une coupure de phase est prévue au moins par intermittence, caractérisé par le fait que, tout en mesurant simultanément au moins le courant réactif dans le circuit électrique de la charge, la tension effective appliquée à la charge est augmentée par accroissement des segments (17, 21, 23) de demi-ondes de tension (temps de conduction), jusqu'à ce qu'une valeur de seuil préétablie du courant (25/311) apparaisse ; par le fait que, après l'apparition de cette valeur de seuil mesurée, la charge est soumise à l'action d'une tension dont la polarité est inverse de celle de la tension appliquée avant l'apparition de la valeur de seuil du courant, et dont la valeur effective est supérieure ; et par le fait que, en cas d'absence de courant au niveau de la valeur de seuil du courant, la valeur effective de la tension est augmentée jusqu'à une valeur de consigne, ou jusqu'à la valeur nominale.

2. Procédé pour réduire l'impulsion de courant d'enclenchement lors de l'actionnement, dans un réseau de courant alternatif, d'une charge (1, 301) soumise à une inductance et munie d'un noyau magnétisable, procédé dans lequel une coupure de phase est prévue au moins par intermittence, caractérisé par le fait que, tout en mesurant simultanément au moins le courant réactif dans le circuit électrique de la charge, la tension effective appliquée à la charge est augmentée par accroissement des segments (17, 21, 23) de demi-ondes de tension (temps de conduction), jusqu'à ce qu'une valeur de seuil préétablie du courant (25/311) apparaisse ; par le fait que, après l'apparition de cette valeur de seuil mesurée, la charge est mise hors circuit et est sollicitée, après une pause pouvant être inférieure à une période de tension alternative, par une tension dont la polarité est identique à celle de la tension appliquée avant l'apparition de la valeur de seuil du courant, et dont la valeur effective est inférieure ; et par le fait que, en cas d'absence de courant au niveau de la valeur de seuil du courant, la valeur effective de la tension est augmentée jusqu'à une valeur de consigne, ou jusqu'à la valeur nominale.

3. Procédé selon la revendication 1 ou 2, caractérisé par le fait que l'augmentation de la tension effective appliquée à la charge (1, 301) est assurée par variation unipolaire, provoquée par diminution de l'angle de coupure de phase.

4. Procédé selon la revendication 1 ou 2, caractérisé par le fait que l'augmentation de la tension effective appliquée à la charge (1, 301) est assurée par variation bipolaire, provoquée par diminution de l'angle de coupure de phase.

5. Procédé selon l'une des revendications 1 à 3, dans lequel une charge (301a) à courant triphasé, munie de trois enroulements, est sélectivement raccordée à un réseau de courant alternatif triphasé, en différents groupes de connexion, caractérisé par le fait que, en présence d'un groupe de connexion branché en triangle ou en étoile, l'on fait tout d'abord circuler le courant de façon progressive par l'intermédiaire de deux phases, par accroissement des segments de demi-ondes de tension (temps de conduction), jusqu'à ce que la valeur de seuil préétablie du courant réactif soit atteinte dans la zone de saturation en fer ; par le fait que ces deux phases sont-ensuite enclenchées avec polarité inverse de celle de la tension appliquée avant l'apparition de la valeur de seuil du courant, puis la troisième phase est interconnectée, avec temporisation, en plus des deux autres phases ; ou par le fait que, lorsque la valeur de seuil préétablie du courant réactif est atteinte, l'alimentation en courant est mise a l'arrêt ; par le fait que deux phases sont ensuite enclenchées, respectivement dans la même position de polarité et avec un plus petit temps de conduction des demi-ondes de tension qui ont engendré les impulsions de courant respectives antérieures, avant que la valeur de seuil du courant réactif des phases individuelles soit atteinte ou dépassée ; et par le fait que la troisième phase est ensuite interconnectée, avec temporisation, en plus des deux autres phases.

6. Procédé selon la revendication 5, caractérisé par le fait que l'enclenchement des deux phases a lieu, par rapport à la phase retardataire, avec une coupure des demi-ondes de tension telle que cette dernière engendre une impulsion de courant réactif située dans la plage du courant en circuit ouvert ; et par le fait que l'interconnexion temporisée de la troisième phase a lieu de façon telle que la somme des courants réactifs des trois phases soit sensiblement égale à zéro pour éviter une asymétrie dans l'allure ultérieure.

7. Procédé selon l'une des revendications 1 à 3, dans lequel une charge (301a) à courant triphasé, munie de trois enroulements, est sélectivement raccordée à un réseau de courant alternatif triphasé, en différents groupes de connexion, caractérisé par le fait que, en présence d'un groupe de connexion branché en étoile avec conducteur central, une première phase est tout d'abord enclenchée contre le conducteur central et est parcourue par du courant de façon progressive, par accroissement des segments de demi-ondes de tension (temps de conduction), jusqu'à ce que la valeur de seuil préétablie du courant réactif soit atteinte dans la zone de saturation en fer ; par le fait que cette phase est ensuite enclenchée avec polarité inverse de celle de la tension appliquée avant l'apparition de la valeur de seuil du courant (311), puis les deux autres phases sont interconnectées avec temporisation, en plus de la première phase, lorsque la somme des courants réactifs des trois phases est sensiblement égale à 0 et lorsque des courants identiques, mutuellement symétriques, circulent dans les trois phases ; ou par le fait que, lorsque la valeur de seuil du courant (311) est atteinte, l'alimentation en courant est mise à l'arrêt ; par le fait que la première phase est ensuite enclenchée dans la même position de polarité et avec un plus petit temps de conduction de la demi-onde de tension qui a engendré l'impulsion de courant réactif antérieure, avant que la valeur de seuil du courant réactif soit atteinte ou dépassée ; et par le fait que les deux autres phases sont ensuite interconnectées, avec temporisation, en plus de la première phase.

8. Procédé selon la revendication 7, caractérisé par le fait que l'enclenchement de la première phase a lieu avec une coupure des demi-ondes de tension telle que cette dernière engendre une impulsion de courant réactif située dans la plage du courant en circuit ouvert.

9. Procédé selon l'une des revendications 1 à 3 et 5 à 8, caractérisé par le fait que, pour déterminer la coupure des demi-ondes de tension au début de l'enclenchement, la valeur de crête du courant réactif en circuit ouvert est sensiblement préétablie en tant que valeur de seuil ; par le fait que les segments des demi-ondes de tension sont accrus jusqu'à ce que cette valeur de seuil du courant soit atteinte ; et par le fait que l'angle associé de coupure de tension est mémorisé.

10. Procédé selon les revendications 1 à 3 et 5 à 9, caractérisé par le fait que, en présence d'une charge fictive, la part de courant réactif et la part de courant actif sont mesurées ; par le fait que la coupure des demi-ondes de tension est augmentée jusqu'à ce que la valeur de crête de l'impulsion de courant réactif soit sensiblement égale à la valeur de crête de l'impulsion de courant actif ; et par le fait que la valeur associée de la coupure des demi-ondes de tension est mémorisée.

11. Procédé selon la revendication 4, dans lequel un réseau de courant alternatif triphasé est sélectivement raccordé, en différents groupes de connexion, à une charge à courant triphasé munie de trois enroulements, caractérisé par le fait que les trois phases font toutes l'objet d'une variation avec bipolarité identique et, progressivement, avec des angles de coupure identiques ; et par le fait que, lors du dépassement d'un seuil préétabli du courant réactif, l'on continue de faire circuler le courant en opposition de phase par rapport à l'impulsion de courant réactif apparue, avec un temps de conduction (λ) accru.

12. Procédé selon l'une des revendications 1 à 3 ou 5 à 11, caractérisé par le fait que, lors d'un fonctionnement en mode groupes d'impulsions et en présence d'une charge fictive variable, le courant réactif est mesuré en continu ; et par le fait que, lors du dépassement d'une valeur préétablie, notamment lors du dépassement de la valeur instantanée du courant actif, le temps de conduction de la première demionde de tension respectivement enclenchée est diminué lorsque la polarité de l'impulsion de courant réactif est identique à la polarité de ladite demi-onde, et le temps de conduction est augmenté lorsque la polarité est inverse.

13. Procédé selon l'une des revendications 5 à 12, caractérisé par le fait que, pour identifier le groupe de connexion de la charge raccordé au réseau de courant triphasé, une phase est tout d'abord sollicitée contre le point neutre présentant un grand angle de coupure de phase et une valeur effective de tension conséquemment petite, et il s'opère alors un contrôle du courant.

14. Dispositif pour limiter le courant d'enclenchement d'une charge soumise à une inductance et présentant un noyau magnétisable, en particulier d'un transformateur (1), le dispositif comportant un interrupteur de courant alternatif (302/38) qui est branché en série avec la charge et est relié à une commande (303, 303a) de coupure de phase, notamment pour la mise en oeuvre du procédé selon l'une des revendications 1 à 13, caractérisé par le fait qu'un dispositif (305, 305a, 305b) mesureur de courant est prévu au moins pour le courant réactif circulant dans le circuit électrique de la charge ; et par le fait que ce dispositif mesureur de courant, ainsi que la commande de coupure de phase, sont reliés à une commande de processus (306, 306a) pour augmenter la tension effective appliquée à la charge, ainsi que pour influencer, en fonction du courant réactif, la commande de coupure de phase lors de l'apparition d'une valeur de seuil du courant, soit dans le sens d'une variation de la polarité de la tension appliquée à la charge, ainsi que d'une diminution de l'angle de coupure de phase, soit, lors d'une pause prévue après l'apparition d'une valeur de seuil du courant et pouvant être inférieure à une période de tension alternative, dans le sens d'une répétition d'une demi-onde dé tension coupée, présente avant l'apparition de la valeur de seuil du courant, puis d'une sollicitation consécutive par une tension en opposition de phase et, en cas d'absence du courant réactif au niveau de la valeur de seuil du courant, dans le sens d'une augmentation de la tension effective jusqu'à une valeur de consigne, respectivement jusqu'à la valeur nominale.

15. Dispositif selon la revendication 14, dans lequel, par l'intermédiaire du circuit (48, 54, 63, 64, 65, 67) de coupure de phase, la jonction entre la charge (1) soumise à une inductance et la tension alternative (10) du réseau peut être réglée, à partir de l'instant de l'enclenchement (17), avec un temps de conduction à accroissement permanent, et dans lequel il est prévu, en fonction du courant réactif, une influence exercée sur la commande de coupure de phase lors de l'apparition d'une valeur de seuil du courant, dans le sens d'une variation de la polarité de la tension appliquée à la charge, ainsi que d'une diminution de l'angle de coupure de phase, caractérisé par le fait qu'il est prévu un circuit comparateur (39, 50, 87, 88, 92) branché en série avec la charge (1) soumise à une inductance, et dont la sortie (93) est raccordée au circuit (48, 63, 64, 96) de coupure de phase ; par le fait que, dans le cas d'une sollicitation par un signal de surintensité (93) du circuit primaire, engendré par le circuit comparateur (50, 87, 88, 92), le circuit (48, 54, 63, 64, 65, 67) de coupure de phase sollicite l'électrode de commande (55) de l'interrupteur de courant alternatif (38), pour au moins une demi-onde, par un signal d'amorçage présentant un angle prédéterminé (198) de coupure de phase, établissant une rémanence, l'angle (198) de coupure de phase, établissant une rémanence, étant plus petit que l'angle de coupure (23, 86) affectable à l'apparition du signal de surintensité (93) du circuit primaire ; et par le fait que, dans le circuit (48, 54, 63, 64, 65, 67) de coupure de phase, dans les demi-ondes succédant aux demi-ondes (198) établissant une rémanence, un signal respectif d'amorçage peut être engendré en présence de l'angle prédéterminé de coupure de phase.

16. Dispositif selon la revendication 14, dans lequel, par l'intermédiaire du circuit (48, 54, 63, 64, 65, 67) de coupure de phase, la jonction entre la charge (1) soumise à une inductance et la tension alternative (10) du réseau peut être réglée, à partir de l'instant de l'enclenchement (17), avec un temps de conduction à accroissement permanent, caractérisé par le fait que le circuit (146, 56, 95) de coupure de phase assure la jonction précitée uniquement avec des coupures de phase unipolaires (117, 121, 123) ; par le fait que, dans le cas d'une sollicitation par un signal de surintensité (25) du circuit primaire, engendré par le circuit comparateur (88, 92), le circuit (146, 56, 95) de coupure de phase sollicite l'électrode de commande (158) de l'interrupteur de courant alternatif (38), pour la demi-onde (198′) à polarité inverse, directement successive dans le temps, et pour les ondes complètes immédiatement successives, par un signal d'amorçage de 150 à 180° ; et par le fait que, dans le circuit (146, 56, 95) de coupure de phase, durant les demi-ondes (199) succédant à la demi-onde (198), un signal respectif d'amorçage a été engendré en présence de l'angle prédéterminé (197′) de coupure de phase (figure 15).

17. Dispositif selon la revendication 15 ou 16, caractérisé par le fait que le circuit (48, 54, 63, 64, 65, 67) de coupure de phase présente un circuit (63, 64) de mémorisation de tension, dans lequel la valeur de la tension de sortie est variable dans le temps, et un générateur de fonctions (67, 68, 69), la valeur de la tension (66) du circuit (63, 64) de mémorisation de tension pouvant être comparée, dans un comparateur (65), à une tension de déclivité (81) du générateur de fonctions (67, 68, 69), variant périodiquement par rapport à la tension alternative (10) du réseau ; et par le fait que, en cas d'identité des deux signaux de tension (66, 81), le comparateur (65) permet la génération d'un signal d'amorçage sollicitant l'électrode de commande (55) (figure 12).

18. Dispositif selon la revendication 17, caractérisé par le fait que le circuit (63, 64) de mémorisation de tension présente un organe du type RC, revêtant la forme d'un condensateur (63) et d'une résistance de décharge (64) branchée en parallèle avec ce dernier ; par le fait que le générateur (67) de dents de scie permet la génération d'une tension de déclivité (81) croissante ; et par le fait que, en cas d'identité de cette tension (81) avec la tension (66) du condensateur, dont la valeur diminue, le signal d'amorçage peut être engendré dans le comparateur (65).

19. Dispositif selon la revendication 17 ou 18, caractérisé par le fait qu'il est prévu un circuit (61, 62) de réglage de la tension initiale, au moyen duquel, lors de l'enclenchement respectif de la charge ou de l'appareil (1) d'alimentation en courant, le circuit (63, 64) de mémorisation de tension peut être réglé (61) sur une valeur de tension prédéterminée.

20. Dispositif selon l'une des revendications 17 à 18, caractérisé par le fait qu'il est prévu un circuit (96, 97, 98) de fonctionnement en continu, par lequel le niveau de la tension du circuit (63, 64) de mémorisation de tension peut être ajusté, d'après un signal de surintensité (97, 20) du circuit primaire, de telle sorte que le signal d'amorçage de l'angle prédéterminé (198) de coupure de phase puisse être engendré dans le comparateur du circuit de commande de coupure.

21. Dispositif selon la revendication 20, caractérisé par le fait qu'un shunt mesureur (39) est branché en série avec la charge (1) ; par le fait que la chute de tension s'opérant par le shunt mesureur (39) peut être détectée par un circuit comparateur (87, 88, 91, 92) ; et par le fait que, dans le circuit comparateur (87, 88, 91, 92), le courant réel détecté par le shunt mesureur (39) peut être comparé à un courant maximal de consigne, lors du dépassement duquel le circuit (63, 64) de mémorisation de tension peut être réglé sur l'angle (198) de coupure de phase, établissant une rémanence.

22. Dispositif selon l'une des revendications 17 à 21, caractérisé par le fait que, en vue d'engendrer le signal de surintensité (97, 20), le courant maximal de consigne est réglable (91, 91′, 205) entre le simple et le décuple du courant nominal.

23. Dispositif selon l'une des revendications 17 à 22, caractérisé par le fait qu'il est prévu, dans le circuit (48, 54, 63, 64, 65, 67) de coupure de phase, un circuit (48, 98˝, 99) à valeurs de consigne par lequel, par l'intermédiaire d'un organe de temporisation (50), au cours des demi-ondes succédant aux demi-ondes (97, 198) établissant une rémanence, le circuit (63, 64) de mémorisation de tension peut être respectivement réglé sur une valeur de tension prédéterminée (99), de telle sorte qu'un signal d'amorçage puisse être engendré en présence de l'angle prédéterminé (100, 110) de coupure de phase.

24. Dispositif selon l'une des revendications 17 à 23, caractérisé par le fait qu'il est prévu au moins un circuit (211, 212) d'identification de charges erronées qui, lors du dépassement positif et/ou lors du dépassement négatif d'une plage (216) de courants de consigne, ouvre à coup sûr l'interrupteur de courant alternatif (38).

25. Dispositif selon la revendication 24, caractérisé par le fait que, lors de l'apparition d'une sous-intensité, un circuit de charge partielle règle la valeur de tension (66) du circuit (63, 64) de mémorisation de tension de telle sorte que, à chaque fois, seul un petit angle de coupure soit mis en circuit pour chaque demi-onde considérée.

26. Dispositif selon l'une des revendications 18 à 25, caractérisé par le fait que le circuit (146, 56, 95) de coupure de phase présente un circuit (163, 64) de mémorisation de tension, dans lequel la valeur de la tension de sortie est variable dans le temps, et un générateur de fonctions, la valeur de la tension (66) du circuit (163, 64) de mémorisation de tension pouvant être comparée, dans un comparateur, à une tension de déclivité du générateur de fonctions, variant périodiquement par rapport à la tension alternative (10) du réseau ; et par le fait que, en cas d'identité des deux signaux de tension, le comparateur permet la génération d'un signal de commande sur des conducteurs de connexion (153, respectivement 154) qui correspondent à une polarité de la tension alternative (10) du réseau, et agissent sur l'électrode de commande (158), dispositif dans lequel il est prévu, sur l'un des deux conducteurs de connexion, un circuit logique (51, 95) qui est raccordé à la sortie du circuit comparateur (88, 92), et par lequel cette ligne de signaux peut être verrouillée jusqu'à ce que le circuit comparateur (88, 92) ait détecté un signal de surintensité (25).

27. Dispositif selon l'une des revendications 16 à 26, caractérisé par le fait qu'un shunt mesureur (39) est branché en série avec l'appareil (1) d'alimentation en courant ; par le fait que la chute de tension s'opérant par le shunt mesureur (39) peut être détectée par le circuit comparateur (88, 92) ; par le fait que, dans le circuit comparateur (88, 92), le courant réel détecté par le shunt mesureur (39) peut être comparé à un courant maximal de consigne, lors du dépassement duquel le circuit de mémorisation de tension peut être réglé, par l'entremise d'un commutateur d'ajustement (96), sur l'angle (198′) de coupure de phase ; et par le fait que cet angle (198′) de coupure de phase commence, après quelques périodes, à transiter en continu vers l'angle (197') de coupure de phase.

28. Dispositif selon l'une des revendications 16 à 27, caractérisé par le fait qu'il est prévu, entre la partie (31) du réseau et le circuit (146) de commande de coupure, un circuit (148′, 48˝) de décalage de phase au moyen duquel peut être réglée, avec avance, la tension de synchronisation du circuit d'activation (146) de la tension (10) du réseau.

29. Dispositif selon l'une des revendications 14 à 28, caractérisé par le fait qu'il présente, en vue de la détermination d'une coupure de demi-ondes de tension pour la mise en circuit d'une charge fictive s'opérant pratiquement sans à-coups, en particulier lors d'un fonctionnement en mode groupes d'impulsions, un dispositif (318, 320) mesureur du courant réactif, ainsi qu'un dispositif (319, 321) mesureur du courant actif, et un dispositif conçu pour comparer ces valeurs mesurées, ainsi que pour mémoriser une valeur de coupure de demi-ondes de tension, obtenue avec des valeurs mesurées sensiblement identiques.

30. Dispositif selon l'une des revendications 14 à 28, caractérisé par la présence d'une charge à courant triphasé qui est raccordée à un réseau triphasé et présente des interrupteurs de courant alternatif, situés dans les ramifications de phases, et un dispositif mesureur de courant pour au moins deux ramifications de phases ; et par le fait qu'il comporte une commande de processus (306a), conçue au moins pour déterminer les instants individuels d'enclenchement de phase.

31. Dispositif selon la revendication 30, caractérisé par le fait qu'il est prévu un dispositif d'identification de groupes de connexion, muni d'une commande séquentielle pour fournir du courant aux phases individuelles, avec décalage dans le temps.
